(19) Europäisches Patentamt
European Patent Office
Office européen des brevets

(11) **EP 3 050 659 B1**

(12) **EUROPÄISCHE PATENTSCHRIFT**

(45) Veröffentlichungstag und Bekanntmachung des Hinweises auf die Patenterteilung:
**28.12.2022   Patentblatt 2022/52**

(21) Anmeldenummer: **15195123.3**

(22) Anmeldetag: **18.11.2015**

(51) Internationale Patentklassifikation (IPC):
**B23F 5/04** *(2006.01)*     **B23F 19/00** *(2006.01)*
**B23F 21/00** *(2006.01)*     **B23F 21/02** *(2006.01)*

(52) Gemeinsame Patentklassifikation (CPC):
**B23F 9/02; B23F 5/04; B23F 19/002; B23F 21/005; B23F 21/026; B23F 23/1225**

(54) **VERFAHREN UND VORRICHTUNG ZUR VERZAHNBEARBEITUNG EINES WERKSTÜCKES DURCH EIN DIAGONALWÄLZVERFAHREN**

METHOD AND DEVICE FOR GEAR CUTTING A WORKPIECE BY MEANS OF A DIAGONAL GENERATING METHOD

PROCÉDÉ ET DISPOSITIF D'USINAGE DE DENTURES D'UNE PIÈCE À USINER SELON UN PROCÉDÉ DE LAMINAGE DIAGONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015   DE 102015000974**

(43) Veröffentlichungstag der Anmeldung:
**03.08.2016   Patentblatt 2016/31**

(73) Patentinhaber: **Liebherr-Verzahntechnik GmbH**
**87437 Kempten (DE)**

(72) Erfinder: **Würfel, Robert**
**87499 Wildpoldsried (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A1- 1 995 010     DE-A1- 19 706 867**
**DE-A1-102012 019 492     US-A- 4 961 289**
**US-A1- 2011 250 029**

Processed by Luminess, 75001 PARIS (FR)

**Beschreibung**

Die vorliegende Erfindung betrifft ein Verfahren zur Verzahnbearbeitung eines Werkstückes durch ein Diagonalwälzverfahren. Bei einem solchen Diagonalwälzverfahren wird das Werkstück durch das Abwälzen eines Werkzeuges verzahnbearbeitet.

Die Erfindung betrifft dabei ein Diagonalwälzverfahren, bei welchem während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt. Mit dem Begriff "Axialvorschub des Werkzeuges" ist dabei eine Relativbewegung des Werkzeuges zum Werkstück in Axialrichtung des Werkzeuges gemeint. Mit dem Begriff "Axialvorschub des Werkstückes" ist eine Relativbewegung des Werkzeuges zum Werkstück in Axialrichtung des Werkstückes gemeint. Je nach Ausgestaltung der Verzahnbearbeitungsmaschine, auf welcher das erfindungsgemäße Verfahren durchgeführt wird, können dabei unterschiedliche Maschinenachsen zur Erzeugung des Axialvorschubs des Werkzeuges und der Axialvorschubs des Werkstückes herangezogen werden. Beispielsweise kann dabei ausschließlich das Werkzeug sowohl in Richtung seiner Achse, als auch in Richtung der Achse des Werkstückes verfahren werden. Da es sich um ein Wälzverfahren handelt, sind weiterhin die Rotationsbewegungen des Werkzeuges und des Werkstückes gekoppelt. Bei dem Werkstück kann es sich insbesondere um ein Zahnrad handeln.

Bei der Verzahnbearbeitung im Diagonalwälzverfahren kommen durch den Axialvorschub des Werkzeuges, welcher auch als Vershiften bezeichnet wird, nacheinander unterschiedliche Bereiche des Werkzeuges mit dem Werkstück in Kontakt. Solche Diagonalwälzverfahren werden üblicherweise dazu eingesetzt, um eine möglichst gleichmäßige Abnutzung der Werkzeugoberfläche zu erreichen.

Aus der EP 1 995 010 B1, die als Basis für den Oberbegriff des Anspruchs 1 angesehen werden kann, ist ein Diagonalwälzverfahren bekannt, bei welchem ein Werkzeug mit einer ballig korrigierten Verzahnungsgeometrie eingesetzt wird, um ein ballig modifiziertes Werkstück zu erzeugen. Hierzu wird während des Bearbeitungsverfahrens die Zustellung des Werkzeuges an das Werkstück ebenfalls ballig verändert. Dabei soll das Diagonalverhältnis, welches als das Verhältnis der während der Bearbeitung in Achsrichtung des Werkzeuges und in in Achsrichtung des Werkstückes zurückgelegten Strecken definiert ist, so eingestellt werden, dass sich eine gewünschte Schränkung ergibt.

Aus der DE 10 2012 015 846 A1 ist weiterhin ein Verfahren bekannt, bei welchem im Diagonalwälzverfahren ein in seiner Oberflächengeometrie modifiziertes Werkzeug eingesetzt wird, wobei die Oberflächengeometrie im Wälzbild zumindest lokal in einer ersten Richtung des Werkzeuges einen konstanten Wert aufweist und in einer zweiten Richtung, welche senkrecht zur ersten Richtung verläuft, durch eine Funktion f(x) gegeben ist. Diese Modifikation des Werkzeuges führt zu einer entsprechenden Modifikation der Oberflächengeometrie des Werkstückes. Dabei wird u. a. das zum Bearbeiten eingesetzte Diagonalverhältnis so gewählt, dass die Modifikation des Werkzeuges die gewünschte Modifikation des Werkstückes erzeugt.

Weitere Verzahnverfahren sind aus den Druckschriften US 2011/250029 A1, US 4 961 289 A und DE 197 06 867 A1 bekannt.

Aufgabe der vorliegenden Erfindung ist es, die aus dem Stand der Technik bekannten Diagonalwälzverfahren weiterzuentwickeln und zu verbessern. Ein mögliches Ziel der vorliegenden Erfindung kann dabei sein, die Flexibilität des Bearbeitungsverfahrens zu verbessern, insbesondere im Hinblick auf die erzeugbaren Modifikationen. Ein anderes Ziel der vorliegenden Erfindung kann darin liegen, die zur Verfügung stehenden Schleifbereiche der Schleifwerkzeuge besser nutzen zu können.

Diese Aufgabe wird erfindungsgemäß durch die unabhängigen Ansprüche der vorliegenden Anmeldung gelöst. Vorteilhafte Ausgestaltungen der vorliegenden Erfindung sind Gegenstand der Unteransprüche.

Die vorliegende Erfindung zeigt ein Verfahren zur Verzahnbearbeitung eines Werkstückes durch ein Diagonalwälzverfahren, mit welchem das Werkstück durch das Abwälzen eines Werkzeuges verzahnbearbeitet wird. Während der Bearbeitung erfolgt ein Axialvorschub des Werkzeuges mit einem durch das Verhältnis zwischen Axialvorschub des Werkzeuges und Axialvorschub des Werkstückes gegebenen Diagonalverhältnis. Erfindungsgemäß wird dabei im Rahmen der Bearbeitung eines Werkstückes das Diagonalverhältnis verändert, wobei das Diagonalverhältnis während der Bearbeitung des Werkstückes in Abhängigkeit von dem Axialvorschub des Werkstückes und/oder Werkzeuges variiert wird. Bei dem erfindungsgemäßen Verfahren zur Verzahnbearbeitung kann es sich dabei insbesondere um ein Verfahren zur Hartfeinbearbeitung und / oder ein Schleifverfahren handeln. Bei dem Werkstück handelt es sich bevorzugt um ein Zahnrad. Weiterhin kommt erfindungsgemäß als Werkzeug bevorzugt eine Schleifschnecke zum Einsatz.

Das erfindungsgemäße Verfahren kann dabei insbesondere zur Bearbeitung zylindrischer oder konischer Werkstücke bzw. Verzahnungen eingesetzt werden. Die Verzahnungen können dabei symmetrisch oder asymmetrisch ausgeführt sein.

Bei den aus dem Stand der Technik bekannten Diagonalwälzverfahren war es zwar bekannt, vor der Durchführung des Verfahrens ein spezifisches Diagonalverhältnis auszuwählen, mit welchem dann die Verzahnbearbeitung erfolgte. Während der Bearbeitung des Werkstückes selbst wurde jedoch mit einem konstanten Diagonalverhältnis gearbeitet. Der Erfinder der vorliegenden Erfindung hat nun erkannt, dass durch eine Veränderung des Diagonalverhältnisses im Rahmen der Bearbeitung eines Werkstückes vielfältige neue Möglichkeiten eröffnet werden.

Bevorzugt erfolgt die erfindungsgemäße Veränderung des Diagonalverhältnisses dabei im Rahmen eines Verfahrens zur Herstellung eines Werkstückes mit korrigierter Verzahnungsgeometrie und / oder modifizierter Oberflächenstruktur, bei welchem mittels einer gezielten Modifikation der Oberflächengeometrie des Werkzeuges und einer durch das Diagonalwälzverfahren erzeugten, vom Diagonalverhältnis abhängigen Abbildung der Oberfläche des Werkzeuges auf die Oberfläche des Werkstückes eine entsprechende Modifikation auf der Oberfläche des Werkstückes erzeugt wird. Insbesondere kann im Rahmen eines solchen Verfahrens das Diagonalverhältnis verändert werden, um zusätzliche Variationsmöglichkeiten bei der Erzeugung der Modifikationen zur Verfügung zu stellen.

Im Rahmen eines solchen Verfahrens zur Erzeugung einer modifizierten Oberflächengeometrie des Werkstückes kann die gezielte Modifikation der Oberflächengeometrie des Werkzeuges erzeugt werden, indem die Position des Abrichters zum Werkzeug beim Abrichten in Abhängigkeit von dem Werkzeugdrehwinkel und / oder der Werkzeugbreitenposition variiert wird. Hierdurch ergibt sich eine besonders einfache Möglichkeit, Modifikationen der Oberflächengeometrie des Werkzeuges zu erzeugen.

Das Abrichten kann dabei ein- oder zweiflankig erfolgen. Weiterhin kann das Abrichten in einem Hub erfolgen, oder in mehreren Hüben.

Insbesondere kann die Profilrolle dabei beim Abrichten vom Fußbereich bis zum Kopfbereich mit dem Zahn des Werkzeuges in Kontakt stehen, so dass die Modifikation über die gesamte Zahnhöhe in einem Hub erfolgt.

Alternativ kann die Profilrolle beim Abrichten nur in Teilbereichen zwischen Fuß und Kopf mit dem Zahn des Werkzeuges in Kontakt stehen, so dass die Modifikation über die Zahnhöhe in mehreren Hüben erfolgt.

Das Abrichten des Zahnkopfes kann über einen Kopfabrichter erfolgen.

Die vorliegende Erfindung kann jedoch auch bei nicht-abrichtbaren Werkzeugen zum Einsatz kommen. In diesem Fall werden die Modifikationen des Werkzeugs nicht während des Abrichtens, sondern bereits bei der Herstellung der Werkzeuge erzeugt. Hierzu kann jedoch ggf. ein dem Abrichten entsprechendes Verfahren eingesetzt werden. Bevorzugt kommt die vorliegende Erfindung aber bei abrichtbaren Werkzeugen zum Einsatz.

Bevorzugt weist die Modifikation der Oberflächengeometrie des Werkstückes auf der Zahnflanke im Wälzbild zumindest in einem ersten Bereich und / oder lokal in einer ersten Richtung des Werkstückes einen konstanten Wert auf, während die Modifikation in einer zweiten Richtung des Werkstückes, welche senkrecht zur erstens Richtung verläuft, durch eine Funktion $F_{Ft2}$ gegeben ist.

Weiterhin kann vorgesehen sein, dass die zur Herstellung der Modifikation der Oberflächengeometrie des Werkstückes verwendete Modifikation der Oberflächengeometrie des Werkzeuges im Wälzbild zumindest in einem ersten Bereich und / oder lokal in einer ersten Richtung des Werkzeuges einen konstanten Wert aufweist und weiterhin bevorzugt in einer zweiten Richtung des Werkzeuges, welche senkrecht zur ersten Richtung verläuft, durch eine Funktion $F_{Ft1}$ gegeben ist. Bevorzugt ist die Funktion $F_{Ft1}$ auf dem Werkzeug dabei die gleiche, gegebenenfalls linear um einen Faktor gestauchte Funktion wie die Funktion $F_{Ft2}$ auf dem Werkstück. Die lineare Stauchung kann dabei das Argument der Funktion betreffen, und/oder die Größe der Funktion. Selbstverständlich hat die Modifikation auf dem Werkstück dabei das umgekehrte Vorzeichen wie die Modifikation auf dem Werkzeug, da Erhebungen auf der Werkzeugoberfläche Vertiefungen auf der Werkstückoberfläche erzeugen und umgekehrt. Im Normalschnitt kann dabei insbesondere $F_{Ft1}(x)$ = - $F_{Ft2}(cx)$ gelten, d.h. es liegt lediglich in Bezug auf das Argument eine Stauchung vor, im Stirnschnitt kann dagegen ein zusätzlicher konstanter Faktor k im Hinblick auf die Größe der Funktion vorliegen, d.h. $F_{Ft1}(x) = - k * F_{Ft2}(cx)$. Die Faktoren k und c können dabei je nach den konkreten Randbedingungen größer oder kleiner 1 sein.

Erfindungsgemäß kann dabei die Makrogeometrie des Werkzeuges und / oder die Eingriffslinie des Abrichtwerkzeuges und / oder das Diagonalverhältnis und / oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht. Insbesondere werden die Parameter dabei so gewählt, dass durch die auf dem Werkzeug erzeugte Modifikation die auf dem Werkstück gewünschte Modifikation erzeugt wird.

Die Veränderung des Diagonalverhältnisses gemäß der vorliegenden Erfindung kann jedoch nicht nur bei solchen Verfahren zur Herstellung eines Werkstückes mit korrigierter Verzahnungsgeometrie eingesetzt werden, sondern auch bei einem Diagonalwälzverfahren, bei welchem unmodifizierte Werkzeuge zum Einsatz kommen und/oder bei welchen die Werkstücke nicht modifiziert werden.

Gemäß der vorliegenden Erfindung werden bevorzugt evolventische Verzahnungen erzeugt. Die erfindungsgemäß angegebenen Modifikationen beziehen sich dabei auf eine Modifikation gegenüber einer durch eine Evolventenverzahnung gegebenen Oberflächengeometrie. Vorteilhafterweise werden dabei evolventische Werkzeuge, welche ggf. entsprechend modifiziert sind, eingesetzt.

Gemäß einer ersten Variante der vorliegenden Erfindung kann zur Bearbeitung unterschiedlicher Bereiche des Werkstückes mit unterschiedlichen Diagonalverhältnissen gearbeitet werden. Insbesondere kann bei einem solchen Verfahren das Diagonalverhältnis geändert werden, während das Werkstück mit dem Werkzeug in Kontakt steht und durch das Werkzeug verzahnbearbeitet wird, d.h. während eines laufenden Bearbeitungsschrittes. Alternativ oder zustätzlich unterscheiden sich dabei während der Durchführung eines Bearbeitungsschrittes die zum Vorschub des Werkzeuges eingesetzten Diagonalverhältnisse an mindestens zwei Punkten des während der Bearbeitung zurückgelegten Axialvorschubs des Werkzeuges und / oder Werkstückes. Insbesondere kann dabei das Diagonalverhältnis verändert werden, während im Rahmen eines Bearbeitungsschrittes die Breite der Verzahnung abgefahren wird.

In einer zweiten Variante, welche in einer möglichen Ausführungsform mit der ersten Variante kombiniert wird, kann bei der Verwendung unterschiedlicher Bereiche des Werkzeuges mit unterschiedlichen Diagonalverhältnissen gearbeitet werden.

Zum einen kann bei Verwendung unterschiedlicher Bereiche des Werkzeuges, welche jedoch zu einem zusammenhängenden, während eines Bearbeitungsschrittes zum Bearbeiten des Werkstückes eingesetzten Bearbeitungsbereich gehören, mit unterschiedlichen Diagonalverhältnissen gearbeitet wird. Ein solches Vorgehen ergibt sich aufgrund des erfindungsgemäßen Diagonalschleifverfahrens, bei welchen während eines Bearbeitungsschrittes unterschiedliche Bereiche des Werkstückes mit unterschiedlichen Bereichen des Werkzeuges bearbeitet werden, automatisch, wenn gemäß der ersten Variante zur Bearbeitung unterschiedlicher Bereiche des Werkstückes mit unterschiedlichen Diagonalverhältnissen gearbeitet wird.

Jedoch können auch dann, wenn das Werkzeug zwei separate, für unterschiedliche Bearbeitungsschritte eingesetzte Bereiche aufweist, in diesen unterschiedlichen Bereichen mit unterschiedlichen Diagonalverhältnissen gearbeitet werden. In diesem Fall können die beiden unterschiedlichen Bereiche des Werkzeuges dazu eingesetzt werden, um den gleichen Bereich des Werkstückes zu bearbeiten.

Bei beiden Varianten der vorliegenden Erfindung kann in einer möglichen Ausführungsform der vorliegenden Erfindung innerhalb der jeweiligen Bereiche mit einem konstanten Diagonalverhältnis gearbeitet werden. Insbesondere können dabei zwei oder mehr Bereiche vorgesehen sein, innerhalb welcher jeweils mit einem konstanten Diagonalverhältnis gearbeitet wird, wobei sich die Diagonalverhältnisse mindestens zweier Bereiche unterscheiden.

Alternativ hierzu kann das Diagonalverhältnis während der Bearbeitung des Werkstückes in Abhängigkeit von dem Axialvorschub des Werkzeuges variiert werdenDabei kann das Diagonalverhältnis zumindest in einem Bereich des Axialvorschubs als eine nicht konstante und ggf. stetige Funktion des Axialvorschubs gegeben sein. Insbesondere kann das Diagonalverhältnis dabei in Abhängigkeit von dem Axialvorschub frei vorgegeben werden.

Wie bereits oben dargestellt, kann die erfindungsgemäße Veränderung des Diagonalverhältnisses dazu eingesetzt werden, um die sich erfindungsgemäß bei dem oben beschriebenen Verfahren zur Erzeugung von modifizierten Oberflächen eines Werkstückes ergebenden Modifikationen zu beeinflussen. Insbesondere kann dabei die Veränderung des Diagonalverhältnisses dazu eingesetzt werden, um die Ausrichtung der sich auf dem Werkstück ergebenden Modifikationen zu verändern.

Dabei wird im Diagonalwälzverfahren die modifizierte Oberfläche des Werkzeuges auf die Oberfläche des Werkstückes abgebildet, wobei diese Abbildung vom gewählten Diagonalverhältnis abhängt. Insbesondere hängt dabei die erste Richtung des Werkstückes, auf welche die erste Richtung des Werkzeuges, in welcher die Modifikation konstant ist, abgebildet wird, von dem gewählten Diagonalverhältnis ab. Durch die Veränderung des Diagonalverhältnisses während der Bearbeitung unterschiedlicher Bereiche des Werkstückes kann damit in diesen unterschiedlichen Bereichen des Werkstückes eine unterschiedliche Ausrichtung der Modifikation erreicht werden.

Wird dabei in zwei oder mehr Bereichen jeweils mit einem konstanten, jedoch unterschiedlichen Diagonalverhältnis gearbeitet, ergeben sich dementsprechend unterschiedliche, jedoch innerhalb der Bereiche konstante Ausrichtungen der Modifikationen. Wird dagegen das Diagonalverhältnis innerhalb eines Bereiches variiert, ergibt sich eine entsprechende Variation in der Ausrichtung. Ist das Diagonalverhältnis dabei durch eine stetige, nicht konstante Funktion gegeben, ergibt sich dementsprechend eine stetige Veränderung in der Ausrichtung der Modifikation.

In einer möglichen Ausführungsform der vorliegenden Erfindung kann der Verlauf mindestens einer Linie konstanter Modifikation vorgeben werden und hieraus die Variation des Diagonalverhältnisses in Abhängigkeit des Axialvorschubs und insbesondere die nicht-konstante Funktion, durch welche dieser gegeben ist, bestimmt werden. Insbesondere führt dabei eine Linien konstanter Modifikation, welche im Wälzdiagramm keine Gerade bildet, zu einer nicht-konstanten Funktion. Bevorzugt kann dabei der Verlauf zumindest einer Linie konstanter Modifikation zumindest innerhalb gewisser Randbedingungen frei vorgegeben werden.

Dabei kann die Funktion, welche das Diagonalverhältnisses in Abhängigkeit des Axialvorschubs beschreibt, zumindest einen Bereich aufweisen, in dem sie einen stetigen nicht-konstanten Verlauf aufweist. Dies würde einer stetigen Krümmung der Linie konstanter Modifikation entsprechen.

Bevorzugt erfolgt die Variation des Diagonalverhältnisses dabei beim Überstreichen eines modifizierten Bereichs des Werkstücks, so dass sich in diesem Bereich die Ausrichtung der Modifikation ändert.

Die erfindungsgemäße Variation des Diagonalverhältnisses kann dabei sowohl beim Einsatz eines zylindrischen, als auch beim Einsatz eines konischen Werkzeuges eingesetzt werden. Dabei kann die Modifikation des Werkstücks in beiden Fällen durch die Variation des Diagonalverhältnisses beeinflusst werden.

Bevorzugt kann für die Durchführung eines erfindungsgemäßen Verfahrens, bei welchem eine Veränderung des Diagonalverhältnisses erfolgt, während das Werkzeug am Werkstück in Breitenrichtung entlanggeführt wird, ein konisches Werkzeug eingesetzt werden, d.h. ein Werkzeug mit einer konischen Grundform. Hierdurch können die sich durch die Variation des Diagonalverhältnisses ergebenden Modifikationen zusätzlich durch die Einstellung bestimmter Parameter des Werkzeuges oder des Bearbeitungsverfahrens gezielt beeinflusst werden. Bevorzugt wird dabei ein konisches Werkzeug eingesetzt, wenn das Diagonalverhältnis als eine stetige, nicht konstante Funktion gegeben ist.

Das erfindungsgemäß eingesetzte Werkzeug mit einer konischen Grundform weist dabei bevorzugt eine Evolventenverzahnung auf, welche jedoch gegebenenfalls Modifikationen aufweisen kann. Evolventische Verzahnungen weisen dabei eine Geometrie auf, welche sich durch den Hüllschnitt zwischen einem Zylinder und einer Zahnstange ergibt. Die konische Grundform ergibt sich dabei dadurch, dass im Rahmen dieses Hüllschnittes die Drehachse des Zylinders gegen die Hauptebene der Zahnstange verkippt ist.

Gemäß einer bevorzugten Ausführungsform ist der Konuswinkel des Werkzeuges größer als 1', weiterhin bevorzugt größer als 30', und weiter bevorzugt größer als 1°. Bevorzugt ist der Konuswinkel des Werkzeuges jedoch kleiner als 50°, weiter bevorzugt kleiner als 20°, und weiterhin bevorzugt kleiner als 10°.

Insbesondere können die durch die Veränderung des Diagonalverhältnisses erzielbaren Modifikationen dabei beim Einsatz eines konischen Werkzeuges durch eine geeignete Wahl mindestens eines und bevorzugt mehrerer Parameters des Bearbeitungsvorgangs und/oder der Makrogeometrie des Werkzeuges, insbesondere des Achskreuzwinkels und/oder des Achsabstands und/oder des Konuswinkels und/oder des Profilwinkels des Werkzeuges gezielt beeinflusst werden.

Zum einen kann hierdurch eine gewünschte Ausrichtung der Modifikation auf der linken und rechten Zahnflanke erreicht werden. Insbesondere umfasst das vorliegende Verfahren dabei einen Schritt der Vorgabe einer gewünschten Ausrichtung der Modifikation auf der linken und rechten Zahnflanke, und der Bestimmung eines hierfür geeigneten Parameters und/oder einer hierfür geeigneten Kombination an Parametern des Bearbeitungsvorgangs und/oder der Makrogeometrie des Werkzeuges.

Weiterhin kann durch die geeignete Wahl mindestens eines und bevorzugt mehrerer Parameters des Bearbeitungsvorgangs und/oder der Makrogeometrie des Werkzeuges auch die Modifikation auf einer Zahnflanke als solche beeinflusst werden. Insbesondere kann dabei die Ausrichtung und/oder Steigung der Modifikation in unterschiedlichen Bereichen der Zahnflanke beeinflusst werden.

Die gleichen Möglichkeiten ergeben sich auch, wenn das Werkstück eine konische Verzahnung aufweist, und zwar sowohl beim Einsatz eines konischen, als auch eines zylindrischen Werkzeugs.

Das erfindungsgemäß eingesetzte Werkzeug kann dabei in einer ersten Variante mindestens einen modifizierten und einen unmodifizierten Bereich aufweisen. Bevorzugt weist das Werkzeug dabei zwei modifizierte Bereiche auf, zwischen welchen ein unmodifizierter Bereich liegt. Sind dabei zwei modifizierte Bereiche vorgesehen, können die Ausrichtung der Modifikationen und insbesondere die erste Richtung der Modifikationen in diesen Bereichen identisch sein. Hierdurch ergibt sich ein besonders einfaches Abrichtverfahren. Bevorzugt wird dann in den beiden modifizierten Bereichen mit unterschiedlichen Diagonalverhältnissen gearbeitet, um hierdurch eine unterschiedliche Ausrichtung der Modifikation auf dem Werkstück zu erreichen.

In einer zweiten Variante kann das Werkzeug zwei Bereiche mit unterschiedlichen Modifikationen aufweisen. Insbesondere können die Modifikationen dabei eine unterschiedliche Ausrichtung, insbesondere eine unterschiedliche erste Richtung, aufweisen. Hierdurch ergeben sich noch größere Freiheitsgrade bei der Erzeugung unterschiedlich ausgerichteter Modifikationen auf dem Werkstück.

Weiterhin kann die zweite Variante auch mit der ersten Variante kombiniert werden, indem zusätzlich zu den zwei Bereichen mit unterschiedlichen Modifikationen ein unmodifizierter Bereich vorgesehen ist, welcher insbesondere zwischen den beiden modifizierten Bereichen angeordnet sein kann.

Sind mehrere modifizierte Bereiche vorgesehen, können sich die Modifikationen in den beiden Bereichen im Hinblick auf die Form $F_{Ft}$ der Modifikation in der zweiten Richtung unterscheiden.

Erfindungsgemäß einsetzbare modifizierte Werkzeuge können dabei insbesondere dazu eingesetzt werden, um auf unterschiedlichen Bereichen des Werkstückes unterschiedliche Modifikationen vorzunehmen, beispielsweise an der Ober- und Unterkante unterschiedliche und insbesondere unterschiedlich ausgerichtete Rücknahmen zu erzeugen.

In einer alternativen Ausgestaltung der vorliegenden Erfindung kann das eingesetzte Werkzeug mindestens zwei Bereiche aufweisen, welche nacheinander zur Bearbeitung des gleichen Bereiches des Werkstückes eingesetzt werden. Insbesondere kann es sich bei den beiden Bereichen dabei um einen Schruppbereich und einen Schlichtbereich handeln. Der Schruppbereich wird dabei eingesetzt, um einen größeren Materialabtrag bei geringerer Genauigkeit zu erreichen. Der Schlichtbereich wird dagegen nach der Schruppbearbeitung eingesetzt, um die Qualität der Oberflächengeometrie zu verbessern.

Vorteilhafterweise werden dabei die Bearbeitungsschritte mit den beiden Bereichen mit unterschiedlichen Diagonalverhältnissen durchgeführt. Insbesondere kann dabei beim Schruppschritt mit einem anderen Diagonalverhältnis gearbeitet werden als beim Schlichtschritt. Die Diagonalverhältnisse während der jeweiligen Bearbeitungsschritte können dagegen konstant gehalten werden.

Der Einsatz unterschiedlicher Diagonalverhältnisse in den beiden Werkzeugbereichen erlaubt es, die gegebene Werkzeugbreite besser zu nutzen. Insbesondere kann dabei einer der beiden Bereiche kürzer sein als der andere Bereich, obwohl diese zur Bearbeitung des gleichen Werkstückes eingesetzt werden. Entsprechend muss nur das Diagonalverhältnis an die jeweilige Breite des Bearbeitungsbereiches des Werkzeuges angepasst werden.

Bevorzugt nutzen dabei die zur Bearbeitung des Werkstücks eingesetzten Bereiche die gesamte Werkzeugbreite.

Ein solches Vorgehen ist unabhängig davon, ob mit einem modifizierten Werkzeug gearbeitet wird oder nicht, von Vorteil.

In einer bevorzugten Ausführungsform der vorliegenden Erfindung ist jedoch insbesondere der Schlichtbereich modifiziert. Je nach Größe der Modifikation muss der Schruppbereich dagegen nicht unbedingt modifiziert sein. Er kann jedoch ebenfalls modifiziert sein.

Sind dabei beide Bereiche, und insbesondere sowohl der Schrupp- als auch der Schlichtbereich, modifiziert, so weisen die Modifikationen in einer möglichen Ausführungsform jeweils eine unterschiedliche Ausrichtung auf. Dabei ist die Modifikation, welche durch die beiden Bereiche auf dem Werkstück erzeugt werden soll, natürlich jeweils die gleiche. Durch die jeweils unterschiedlichen Diagonalverhältnisse würden identische Modifikationen in den beiden Bereichen jedoch unterschiedlich auf das Werkstück abgebildet. Bevorzugt sind die Modifikationen in den beiden Bereichen daher unterschiedlich ausgerichtet, sodass sie unter Berücksichtigung des unterschiedlichen Diagonalverhältnisses jeweils auf die gleiche Richtung auf dem Werkstück abgebildet werden. Insbesondere kann hierbei ein nicht-abrichtbares Werkzeug eingesetzt werden, da bei der Herstellung der Modifikationen auf einem solchen Werkzeug größere Freiheiten bestehen. Bei abrichtbaren Werkzeuges kann dagegen ggf. durch die Berührlinie des Abrichters eine Einschränkung bestehen.

In einer alternativen Ausführungsform beide Bereiche, und insbesondere sowohl der Schruppals auch der Schlichtbereich, modifiziert sein und eine identische Ausrichtung der Modifikationen aufweisen. Solche Werkzeuge sind leichter durch den oben beschriebenen Abrichtprozess herstellbar, da die Eingriffslinie des Abrichters in das Werkzeug und damit die Richtung der Modifikation auf dem Werkzeug kaum veränderbar sind. Durch die unterschiedlichen Diagonalverhältnisse in den beiden Bereichen führt dies zwar zu unterschiedlichen Ausrichtung der Modifikation auf dem Werkstück. Da der Schruppbereich jedoch ohnehin nur für eine Grobbearbeitung eingesetzt wird, und die endgültige Oberflächenform erst durch den Schlichtschritt erzeugt wird, kann dies in manchen Fällen hingenommen werden.

In diesem Fall führt die Modifikation des Schruppbereichs nur näherungsweise zu der gewünschten Modifikation auf der Verzahnung, wobei die tatsächliche Modifikation jedoch im erlaubten Toleranzbereich liegt. Bevorzugt wird das Diagonalverhältnis für den Schlichtschritt dabei so gewählt, dass sich die gewünschte Ausrichtung des Diagonalverhältnisses ergibt. Bevorzugt wird das Diagonalverhältnis für den Schruppschritt dagegen so gewählt, dass die tatsächliche Modifikation im erlaubten Toleranzbereich liegt. Ggf. kann dabei auch die Form der Modifikation, insbesondere die Funktion $F_{Ft1}$ im Schruppbereich gegenüber dem Schlichtbereich geändert werden.

Auch allgemein kann gemäß der vorliegenden Erfindung die Modifikation in mindestens einem Bereich des Werkzeuges, insbesondere im Schruppbereich, bei dem eingesetzten Diagonalverhältnis nur näherungsweise zu der gewünschten Modifikation auf der Verzahnung führen. Vorteilhafterweise werden die Form der Modifikation und das Diagonalverhältnis dabei so gewählt, dass die tatsächliche Modifikation im erlaubten Toleranzbereich liegt.

In einer weiteren Ausführungsform der vorliegenden Erfindung kann das eingesetzte Werkzeug mindestens zwei Bereiche aufweisen, welche nacheinander zur Bearbeitung unterschiedlicher Bereiche des Werkstückes eingesetzt werden. Erfindungsgemäß kann dabei die Bearbeitung in dem einen Bereich mit einem anderen Diagonalverhältnis erfolgen als in dem anderen Bereich.

Ein solches Vorgehen ist auch bei unmodifizierten Werkzeugen beispielsweise dann von Vorteil, wenn ein bestimmter Bereich des Werkzeuges während der Bearbeitung stärker beansprucht wird als ein anderer Bereich. Bevorzugt wird dabei mit einem größeren Diagonalverhältnis und damit einem schnelleren Axialvorschub des Werkzeuges gearbeitet, wenn das Werkzeug stärker beansprucht wird, und mit einem kleineren Diagonalverhältnis in Bereichen, in welchen das Werkzeug weniger stark belastet wird. Die größere Belastung kann sich insbesondere dadurch ergeben, dass mehr Material abzutragen ist als in anderen Bereichen. Durch ein solches Vorgehen ergibt sich ein gleichmäßigerer Verschleiß des Werkzeuges über die Werkzeugbreite, sodass seltener abgerichtet werden muss. Alternativ oder zusätzlich kann in Bereichen, in welchen geringere Toleranzen im Hinblick auf die Geometrie der Werkstückoberfläche zulässig sind, mit einem größeren Diagonalverhältnis gearbeitet werden, sodass das Werkzeug in diesem Bereich weniger stark verschleißt.

In einer weiteren Variante kann das Werkzeug jedoch auch einen modifizierten und einen unmodifizierten Bereich aufweisen, in welchen mit unterschiedlichen Diagonalverhältnissen gearbeitet wird.

Dabei kann das Diagonalverhältnis in dem unmodifizierten Bereich kleiner gewählt werden als in dem modifizierten Bereich, um die Breite des Werkzeuges zu verringern, da so der unmodifizierte Bereich zur Bearbeitung eines größeren Bereiches des Werkstückes einsetzbar ist und kürzer sein kann als bei einem konstanten Diagonalverhältnis. Das größere Diagonalverhältnis im modifizierten Bereich kann dagegen durch die gewünschte Ausrichtung der Modifikation auf der Zahnflanke oder die gewünschte Auflösung in die zweite Richtung bestimmt sein. In einer anderen Variante kann das Diagonalverhältnis im unmodifizierten Bereich größer sein als in dem modifizierten Bereich, um in diesem Bereich die Belastung des Werkzeuges zu verringern. Ein solches Vorgehen macht insbesondere dann Sinn, wenn der unmodifizierte Bereich mehr Material abtragen muss als der modifizierte Bereich.

Erfindungsgemäß kann dabei beispielsweise in einem Bereich, welcher zur Bearbeitung eines oberen oder unteren Endbereiches des Werkstückes eingesetzt wird, mit einem kleineren Diagonalverhältnis gearbeitet werden als in einem zur Bearbeitung eines mittleren Bereiches des Werkstückes eingesetzten Bereich. Denn bei der Bearbeitung des oberen oder unteren Endbereiches des Werkstückes taucht noch nicht das gesamte Werkzeug in das Werkstück ein, sodass die Belastungen hier niedriger sind.

In einer weiteren Variante der vorliegenden Erfindung kann das Werkzeug zwei modifizierte Bereiche aufweisen, zwischen welchen ein unmodifizierter Bereich liegt, wobei die Bereiche nacheinander zur Bearbeitung unterschiedlicher Bereiche des Werkstückes eingesetzt werden. Bevorzugt wird dabei zumindest in den beiden modifizierten Bereichen mit unterschiedlichen Diagonalverhältnissen gearbeitet. Insbesondere können hierdurch in den jeweiligen Bereichen des Werkstückes unterschiedliche Modifikationen erzeugt werden, und insbesondre Modifikationen mit unterschiedlicher Ausrichtung und insbesondere mit unterschiedlicher erster Richtung. Die beiden modifizierten Bereiche des Werkzeuges können dabei die gleiche Ausrichtung der Modifikation aufweisen. Alternativ können jedoch auch hier bereits unterschiedliche Ausrichtungen der Modifikation gewählt werden. Insbesondere kann es sich bei den beiden modifizierten Bereichen dabei um Bereiche zur Bearbeitung der unteren oberen Kante des Werkstückes handeln.

Bevorzugt sind die modifizierten und der unmodifizierte Bereich so angeordnet, dass der Verlauf des Kontaktpunktes zwischen dem Werkzeug und dem Werkstück bei der Bearbeitung in mindestens einer Schleifposition komplett im unmodifizierten Bereich liegt. Hierdurch wird sichergestellt, dass eine Position zur Verfügung steht, an welcher das Diagonalverhältnis geändert werden kann, ohne dass hierdurch die Geometrie der Verzahnung auf dem Werkstück beeinflusst würde. Dies wird dadurch erreicht, dass das Diagonalverhältnis in einer Schleifposition geändert wird, in welcher der Kontaktpunkt zwischen Werkzeug und Werkstück ausschließlich den unmodifizierten Bereich des Werkzeuges überstreicht, sodass hier keine Modifikation existiert, die durch das Diagonalverhältnis beeinflusst würde. Dabei kann in den beiden modifizierten Bereichen jeweils mit einem konstanten Diagonalverhältnis gearbeitet werden. In diesem Fall wird das Diagonalverhältnis bevorzugt solange konstant gehalten, wie der Kontaktpunkt zwischen Werkzeug und Werkstück durch einen der modifizierten Bereiche verläuft.

Alternativ zu einem solchen Vorgehen ist es jedoch denkbar, das Diagonalverhältnis beispielsweise in einem Übergangsbereich zwischen einem modifizierten und einem unmodifizierten Bereich stetig zu verändern. Hierdurch verlaufen die ersten Richtungen, in welchen die Modifikation konstant ist, in diesem Übergangsbereich jedoch nicht mehr parallel zueinander.

Zur Durchführung eines Verfahrens, wie es oben beschrieben wurde, kann das Werkzeug mindestens zwei Bereiche aufweisen, welche nacheinander zur Bearbeitung des gleichen Bereiches des Werkstückes einsetzbar sind, wobei die beiden Bereiche eine unterschiedliche Breite aufweisen. Dabei wird die Breite der beiden Bereiche an das jeweilige Diagonalverhältnis angepasst. Bei den beiden Bereichen kann es sich insbesondere um einen Schrupp- und einen Schlichtbereich handeln.

Die mindestens zwei Bereiche nehmen dabei zusammen bevorzugt die gesamte Breite des Werkzeuges in Anspruch.

Alternativ oder zusätzlich kann das Werkzeug mindestens einen modifizierten und einen unmodifizierten Bereich aufweisen, welche nacheinander zur Bearbeitung unterschiedlicher Bereiche des Werkstückes einsetzbar sind. Alternativ oder zusätzlich kann das Werkzeug zwei modifizierte Bereiche, zwischen welchen ein unmodifizierter Bereich liegt, auf, welche nacheinander zur Bearbeitung unterschiedlicher Bereiche des Werkstückes einsetzbar sind. In einer möglichen Ausführungsform der vorliegenden Erfindung können die beiden modifizierten Bereiche des Werkzeuges unterschiedlich modifiziert sein, und insbesondere Modifikationen mit unterschiedlicher Ausrichtung aufweisen. Bevorzugt ist das erfindungsgemäße Werkzeug dabei so ausgestaltet, wie dies bereits oben näher dargestellt wurde.

Das Werkzeug kann dabei in einer möglichen Ausführungsform eine konische Grundform aufweisen. Gemäß einer bevorzugten Ausführungsform ist der Konuswinkel des Werkzeuges größer als 1', weiterhin bevorzugt größer als 30', und weiter bevorzugt größer als 1°. Bevorzugt ist der Konuswinkel des Werkzeuges jedoch kleiner als 50°, weiter bevorzugt kleiner als 20°, und weiterhin bevorzugt kleiner als 10°.

Im Rahmen der vorliegenden Erfindung kann zur Bereitstellung eines Werkzeuges, wie es oben beschrieben wurde, oder wie es in einem erfindungsgemäßen Verfahren zur Bearbeitung eines Werkstückes eingesetzt wird, ein Abrichten erfolgen. Dabei wird erfindungsgemäß die gewünschte Modifikation des Werkzeuges durch eine Veränderung der Maschinenkinematik während des Abrichtprozesses erzeugt. Insbesondere kann dabei die Position des Abrichters relativ zum Werkzeug abhängig von dem Werkzeugdrehwinkel und / oder der Werkzeugbreitenposition variiert werden.

Dabei kann das Werkzeug über seine gesamte aktive Oberfläche eine Modifikation mit gleicher Ausrichtung aufweisen. Bevorzugt werden jedoch mindestens ein modifizierter Bereich und mindestens ein unmodifizierter Bereich und / oder mindestens zwei Bereiche mit unterschiedlichen Modifikationen erzeugt. Weiterhin bevorzugt wird dabei ein modifiziertes Werkzeug, wie es bereits oben beschrieben wurde, erzeugt.

Die vorliegende Erfindung umfasst weiterhin eine Verzahnmaschine zur Durchführung eines erfindungsgemäßen Bearbeitungsverfahrens, wie es oben näher beschrieben wurde. Erfindungsgemäß weist die Verzahnmaschine eine Ansteuerungsfunktion auf, welche im Rahmen der Bearbeitung eines Werkstücks das Diagonalverhältnis verändert, wobei das Diagonalverhältnis während der Bearbeitung des Werkstückes in Abhängigkeit von dem Axialvorschub des Werkstückes und/oder Werkzeuges variiert wird. Bevorzugt verändert die Ansteuerungsfunktion das Diagonalverhältnis dabei automatisiert.

Die Verzahnmaschine weist dabei vorteilhafterweise eine Eingabe- und / oder Berechnungsfunktion auf, über welche unterschiedliche Diagonalverhältnisse und / oder ein variables Diagonalverhältnis vorgebbar und / oder bestimmbar sind. Insbesondere kann es die Eingabefunktion dabei erlauben, in unterschiedlichen Bereichen unterschiedliche Diagonalverhältnisse vorzugeben, und / oder ein über die Werkzeugbreite variables Diagonalverhältnis vorzugeben. Alternativ oder zusätzlich kann die Eingabefunktion eine Eingabe einer gewünschten Modifikation erlauben, und bestimmt die zur Erzeugung einer solchen Modifikation notwendigen Diagonalverhältnisse.

Die erfindungsgemäße Steuerungsfunktion kann dabei mindestens zwei nacheinander erfolgende Bearbeitungsschritte durchführen, bei welchen ein jeweils anderer Bereich des Werkzeugs zur Bearbeitung des gleichen Bereiches des Werkstückes eingesetzt wird. Insbesondere kann es sich bei diesen Schritten um mindestens einen Schrupp- und mindestens einen Schlichtschritt handeln.

In einer möglichen Ausführungsform der vorliegenden Erfindung erfolgt die Ansteuerung durch die Steuerungsfunktion dabei so, dass die Bearbeitungsschritte mit unterschiedlichen Diagonalverhältnissen erfolgen. Insbesondere kann dabei der Schruppschritt und der Schlichtschritt mit unterschiedlichen Diagonalverhältnissen durchgeführt werden. Insbesondere kann hierbei ein nicht-abrichtbares Werkzeug eingesetzt werden.

Alternativ oder zusätzlich kann die Steuerungsfunktion im Verlauf eines Bearbeitungsschrittes mindestens einmal das Diagonalverhältnis ändern. Insbesondere kann die Steuerungsfunktion dabei das Diagonalverhältnis verändern, während im Rahmen eines Bearbeitungsschrittes die Breite der Verzahnung abgefahren wird. Bevorzugt arbeitet die Steuerungsfunktion dabei zur Bearbeitung unterschiedlicher Bereiche des Werkstückes mit unterschiedlichen Diagonalverhältnissen. Dabei kann eine Funktionsvariante vorgesehen sein, welche innerhalb der jeweiligen Bereiche mit einem konstanten Diagonalverhältnis arbeitet. Bevorzugt ist in diesem Fall eine Eingabefunktion vorgesehen, welche eine Definition der Bereiche und eine Vorgabe der jeweils dort vorgesehenen Diagonalverhältnisse erlaubt. Alternativ kann die Steuerungsfunktion das Diagonalverhältnis während der Bearbeitung des Werkstückes in Abhängigkeit von dem Axialvorschub des Werkstückes variieren. Insbesondere kann die Variation dabei so erfolgen, dass das Diagonalverhältnis zumindest in einem Bereich des Axialvorschubs als eine nicht-konstante, ggf. stetige Funktion des Axialvorschubs gegeben ist. Bevorzugt weist die Verzahnmaschine dabei eine Eingabefunktion auf, welche die Vorgabe der nicht-konstanten Funktion erlaubt.

Weiterhin bevorzugt weist die Verzahnmaschine eine Auswahloption auf, durch welche zwei oder mehr der oben näher dargestellten unterschiedlichen Eingabe- und / oder Steuerungsfunktionen ausgewählt werden können.

Weiterhin bevorzugt handelt es sich bei der erfindungsgemäßen Verzahnmaschine um eine Verzahnschleifmaschine. Bevorzugt weist die Verzahnschleifmaschine eine Werkzeugspindel, eine Werkstückspindel und/oder eine Spindel für die Aufnahme eines Abrichters, insbesondere einer Abrichtscheibe auf, und Maschinenachsen zur Durchführung der erfindungsgemäßen Verfahren notwendigen Relativbewegungen zwischen Werkstück und Werkzeug und / oder zwischen Werkzeug und Abrichter gemäß der vorliegenden Erfindung.

Die vorliegende Erfindung wird nun anhand von Ausführungsbeispielen und Figuren näher erläutert.

**Kurzbeschreibung der Figuren**

Die Figuren zeigen beispielhaft nur w-z-Diagramme zylindrischer Verzahnungen. Die *w-z*-Diagramme konischer Verzahnungen sind im Allgemeinen nicht rechteckig, meist trapezförmig, da sich der Auswertebereich des Wälzwegs über die Verzahnbreite ändert.

| | |
|---|---|
| Figur 1: | Figur 1 zeigt ein w-z-Diagramm einer Modifikation, bestehend aus gemäß Gleichung (1) modifizierten Bereichen 41 und 41', sowie aus nicht modifizierten Bereichen 42, 42' und 42". Die Geraden 40 und 40' verlaufen in der durch $\rho_{F2}$ gegebenen Richtung. Die Geraden 43 und 43' entsprechen dem Verlauf des Kontaktpunkts. |
| Figur 2: | Figur 2 zeigt ein w-z-Diagramm einer Modifikation, bestehend aus gemäß Gleichung (1) modifizierten Bereichen 51 und 51', sowie aus nicht modifizierten Bereichen 52, 52' und 52". Die Bereiche 51 und 51' haben Modifikationen mit unterschiedlichen Richtungen $\rho_{F2}$. Die Geraden 50 und 50' verlaufen in der durch die jeweiligen $\rho_{F2}$ gegebene Richtung. Die Geraden 53 und 53' entsprechen dem Verlauf des Kontaktpunkts. |
| Figur 3: | Figur 3a zeigt am Beispiel einer rechten Flanke eines rechtsschrägen zylindrischen Werkstücks vier Kurven 60-63, welche jeweils den Verlauf der Punkte im w-z-Diagramm auf dem Werkstück beschreiben, welche |

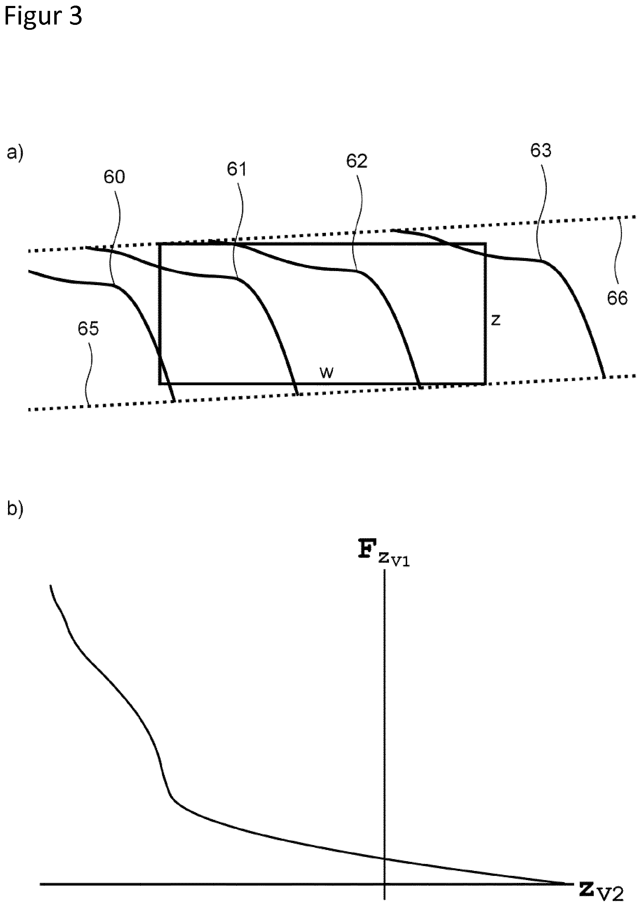

auf eine Gerade auf der Schnecke abgebildet werden. Die vier Kurven entsprechen vier verschiedenen Werten $X_{F1}$ und somit vier verschiedenen Geraden auf der Schnecke. Die Kurven sind gegeneinander entlang der parallelen Geraden 65 bzw. 66 verschoben. Figur 3b zeigt, passend zu Figur 3a, die Funktion $F_{Z_{V1}}(z_{V2})$, welche die Abhängigkeit von $z_{V1}$ von $z_{V2}$ beschreibt.

Figur 4: Figur 4 zeigt ein w-z-Diagramm einer rechten Flanke eines linkschrägen zylindrischen Werkstücks, auf welches eine Modifikation mittels variablen Diagonalverhältnisses aufgebracht wurde. Linie 70 markiert den Verlauf der Punkte, welche auf die durch $X_{F1} = 0$ definierte Gerade auf der Schnecke abgebildet werden. Line 71 markiert den Verlauf der Punkte, welche auf die durch ein $X_{F1} > 0$ definierten Gerade auf der Schnecke abgebildet werden. Entlang der jeweiligen Verläufe ist der Wert der Modifikation konstant.

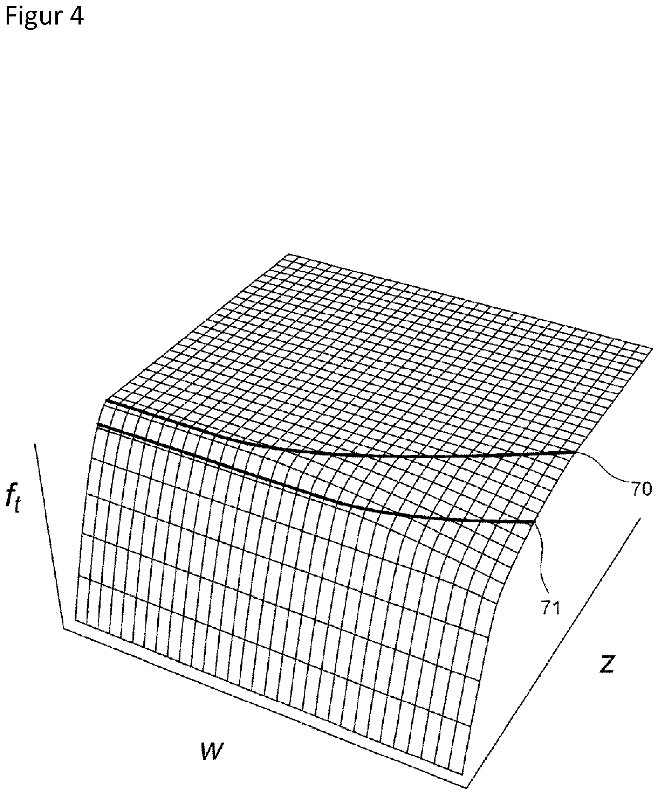

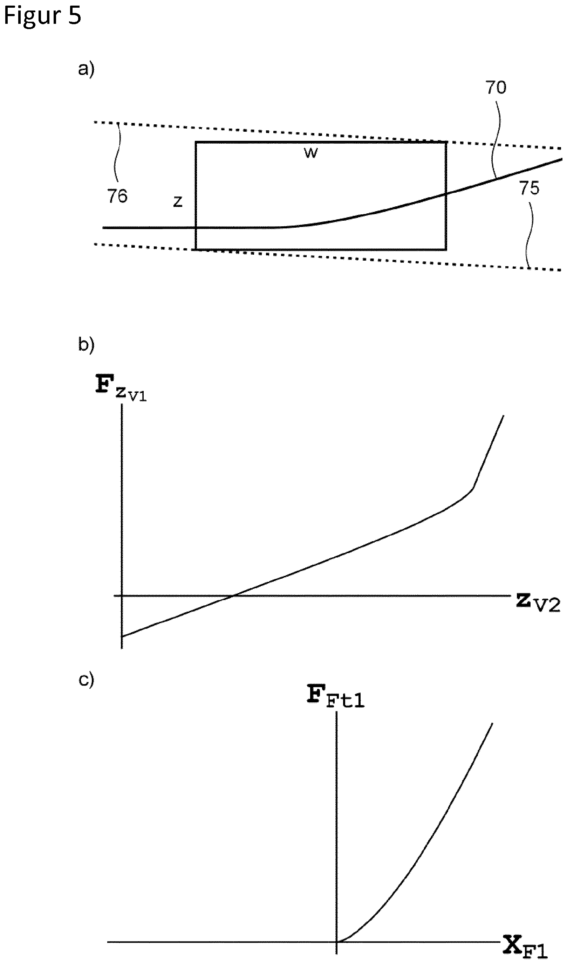

Figur 5: Figur 5a zeigt, in einem Schema wie in Figur 3, den Verlauf 70 der Punkte auf dem Werkstück, welche in dem Beispiel aus Figur 4 auf die durch $X_{F1} = 0$ definierte Gerade auf der Schnecke abgebildet werden. Die Geraden 75 bzw. 76 definieren die Richtung, entlang der die Verläufe für verschiedene $X_{F1}$ gegeneinander verschoben werden. Figur 5b zeigt die im Beispiel in Figur 4 verwendete Funktion $F_{Z_{V1}}(z_{V2})$, welche die Abhängigkeit von $z_{V1}$ von $z_{V2}$ beschreibt. Figur 5c zeigt die im Beispiel in Figur 4 verwendete Funktion $F_{Ft1}(X_{F1})$, welche die Modifikation auf der Schnecke gemäß Gleichung (1) definiert.

Figur 6: Figur 6 zeigt ein w-z-Diagramm einer natürlichen verschränkten Flankenlinienballigkeit. Linie 10 markiert einen Kontaktpfad. Dieser entspricht hier einer Linie mit konstantem Wert der Modifikation.

Figur 7: Figur 7 zeigt ein w-z-Diagramm einer reinen Flankenlinienballigkeit. Linie 11 markiert einen Kontaktpfad. Line 12 markiert eine Gerade mit konstantem Wert der Modifikation.

Figur 8: Figur 8 zeigt ein w-z-Diagramm einer in einer gezielten Richtung verlaufenden Balligkeit. Linie 13 markiert einen Kontaktpfad. Line 14 markiert eine Gerade mit konstantem Wert der Modifikation.

Figur 9: Figur 9 zeigt eine lineare Endrücknahme 16 ohne Übergangsbereich, wie diese durch korrigierte Schleifkinematik nach dem Stand der Technik gefertigt wird. Line 15 markiert einen Kontaktpfad, welcher gleichzeitig einer Geraden mit konstantem Wert der Modifikation entspricht.

Figur 10: Figur 10 zeigt eine lineare Endrücknahme 19 ohne Übergangsbereich, wie diese mit dem hier beschriebenen Verfahren gefertigt werden kann. Line 17 markiert einen Kontaktpfad. Line 18 markiert eine Gerade mit konstantem Wert der Modifikation.

Figur 11: Figur 11 zeigt eine lineare dreieckförmige Endrücknahme 22 ohne Übergangsbereich, wie diese mit dem hier beschriebenen Verfahren gefertigt werden kann. Line 20 markiert einen Kontaktpfad. Line 21 markiert eine Gerade mit konstantem Wert der Modifikation.

Figur 12: Figur 12 zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

Figur 13: Figur 13 zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

Figur 14: Figur 14 zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht.

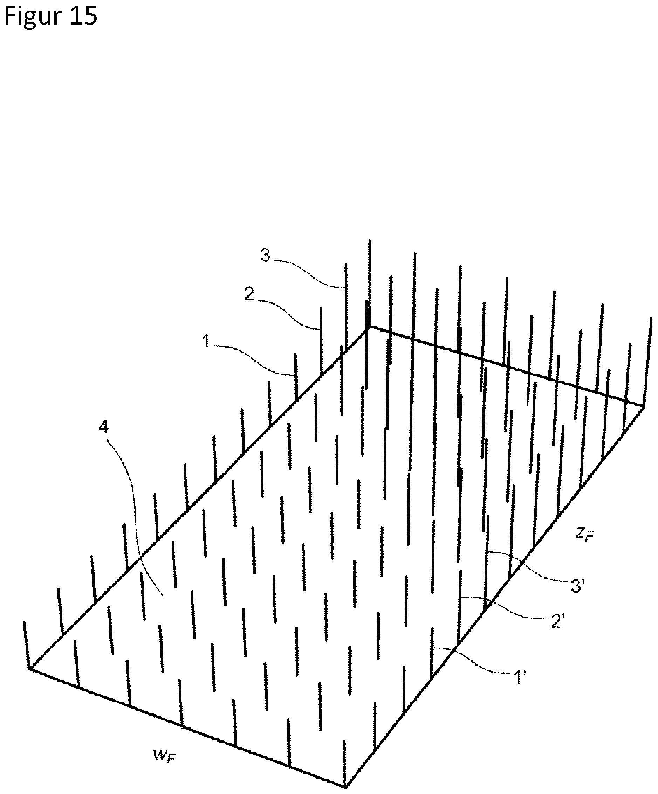

Figur 15: Figur 15 zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke des nicht modifizierten Werkstücks, auf die die Vektoren gestellt werden. Die Vektoren 1 und 1' wurden bereits vom Kontaktpfad überstrichen und sind somit vollständig gekürzt. Die Vektoren 2 und 2' wurden bereits mindestens einmal gekürzt, jedoch noch nicht vom Kontaktpfad überstrichen. Die Vektoren 3 und 3' wurden noch nicht gekürzt und haben somit noch die Länge dem gewählten Aufmaß entsprechend.

Figur 16: Figur 16 zeigt schematisch eine Verzahnmaschine mit den hier als Beispiele aufgeführten Bewegungsapparaten.

## Detaillierte Darstellung der Erfindung

Die Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen

- Schälwälzfräsen

- Schaben

- Wälzschleifen

- Honen

Wird das Verfahren beim Wälzschleifen angewandt, können sowohl abrichtbare als auch nicht abrichtbare Werkzeuge eingesetzt werden. Das Abrichten kann mit einer Profilrolle ein-oder zweiflankig erfolgen, aber ebenso ein-oder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfahren).

Größen, die für linke und rechte Flanken unterschiedlich sind bzw. sein können, werden mit dem Index F versehen. F kann $l$ (links) oder $r$ (rechts) sein. Gleichungen, in den der Index F vorkommt, gelten immer für linke und rechte Flanken. Die hier betrachteten Evolventenverzahnungen werden abhängig von den Grundkreisradien ($r_{br}, r_{bl}$) und den Grundschrägungswinkeln ($\beta_{br}, \beta_{bl}$) in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \beta_{bl}}{r_{bl}}$

3. Konisch symmetrisch: $\beta_{br} \neq \beta_{bl}$ und $r_{br} \cos \beta_{br} = r_{bl} \cos \beta_{bl}$

4. Konisch asymmetrisch: $\beta_{br} \neq \beta_{bl}$ und $r_{br} \cos \beta_{br} \neq r_{bl} \cos \beta_{bl}$ und $\dfrac{\tan \beta_{br}}{r_{br}} \neq \dfrac{\tan \beta_{bl}}{r_{bl}}$

Im Folgenden wird die Klasse der topologischen Oberflächenmodifikationen definiert, welche mit dem hier zunächst beschriebenen Verfahren erzeugt werden können. Zunächst wird dazu die übliche Beschreibung topologischer Oberflächenmodifikationen betrachtet. Diese werden beschrieben über eine Funktion $f_{Ft}(w_F, z_F)$, wobei $w_F$ der Wälzweg und $z_F$ die Position in Breitenlinienrichtung ist. Eine topologische Oberflächenmodifikation gehört zur hier betrachten Klasse an Oberflächenmodifikationen, wenn eine Funktion $F_{Ft}$ existiert, mit

$$f_{Ft}(w_F, z_F) = F_{Ft}(w_F \tan \rho_F + z_F) . \qquad (1)$$

Anschaulich gesprochen bedeutet dies, dass die Oberflächenmodifikation für alle $w_F$ und $z_F$ auf der Zahnflanke mit

$$w_F \tan \rho_F + z_F = X_F , \qquad (2)$$

wobei $X_F$ eine beliebige reelle Zahl ist, denselben Wert hat. Jedes $X_F$ definiert so eindeutig eine Gerade auf der Flanke in den Koordinaten $w_F$ und $z_F$. Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Die folgende Aufzählung nennt bekannte Beispiele der hier betrachteten Oberflächenmodifikationen, von denen einige in FVA Nr. 609 detailliert beschrieben sind:

- Flankenlinienendrücknahme
- Flankenlinienballigkeit
- Dreieckförmige Endrücknahme (Kopf, Fuß oder beidseitig)
- Freie Flankenlinienform

Bisher ist kein Verfahren bekannt, mit dem mit einem der hier betrachteten Fertigungsverfahren die hier betrachteten Oberflächenmodifikation abweichnungsfrei hergestellt werden können, mit Ausnahme reiner Flankenlinienmodifikation bei geradverzahnten zylindrischen Rädern. Mit abweichnungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Eine bisher gebräuchliche Methode, reine Flankenlinienmodifikation zu erzeugen, besteht darin, den Achsabstand zwischen Werkzeug und Werkstück, während das Werkstück axial verschoben wird, zu verändern. Diese Methode liefert jedoch nur bei geradverzahnten zylindrischen Rädern die gewünschte Flankenlinienmodifikation, da nur bei diesen der Verlauf des Kontaktpunkts, im Folgenden auch als Kontaktpfad bezeichnet, zwischen Werkzeug und Werkstück auf beiden Flanken in einer Stirnschnittebenen verläuft und sich so, die durch die Achsabstandsänderung verursachte Oberflächenmodifikation in nur einer Stirnschnittebene auswirkt. Bei allen andern Verzahnungen entsteht auf mindestens einer Flanke eine Verzerrung der Modifikation, auf welche im weiteren Verlauf der Beschreibung dieser Erfindung noch detailliert eingegangen wird.

Für den Spezialfall der Flankenlinienballigkeit, ist diese als Verschränkung bekannte ungewollte Verzerrung schon lange bekannt und es existieren Methoden, diese in gewissem Maße zu kompensieren.

In DE 3704607 (Sulzer) wird für das Wälzschleifen vorgeschlagen, das Diagonalwälzschleifen in Verbindung mit einer Schnecke anzuwenden, welche einen über die Schneckenbreite veränderten Eingriffswinkel aufweist, wobei die Änderung des Eingriffswinkels so gewählt wird, dass die Verschränkung kompensiert wird.

In EP1995010 (Faulstich) wird ebenfalls für das Wälzschleifen vorgeschlagen, das Diagonalwälzschleifen mit einem in weiten Grenzen frei wählbaren Diagonalverhältnis in Verbindung mit einer darauf abgestimmten (hohl-)balligen Schnecke anzuwenden.

Bei diesen beiden Methoden werden nur die Profilwinkelfehler $f_{H\alpha}$ in einer oberen und einer unteren Stirnschnittebene betrachtet und aus diesen die Verschränkung ermittelt bzw. auf diese Weise die Verschänkung so eingestellt, dass sie der Sollvorgabe entspricht. Diese, auf nur zwei Stirnschnittebenen beschränkte Betrachtung, führt jedoch zu Formabweichungen auf der Flanke, welche bei einer typischen Verschränkungsmessung nicht erfasst werden, jedoch bei topologischen Messungen sichtbar werden. Die Methode nach Sulzer hat zudem den Nachteil, dass sie Profilballigkeiten verursacht. Diese können zwar durch einen entsprechenden Vorhalt im Abrichter kompensiert werden, dieser Vorhalt ist dann jedoch nur für eine bestimmte Flankenlinienballigkeit passend. Darüber hinaus berücksichtigen beide Methoden weder das Bearbeiten asymmetrischer und/oder konischer Verzahnungen, noch das Erzeugen asymmetrischer Balligkeiten beim zweiflankigen Bearbeiten.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$

$$= \begin{pmatrix} r_{bF} \cdot \sin\left(s_F \cdot \left(\frac{w}{r_{bF}} + \eta_{bF}\right) - \frac{z \cdot \tan(\beta_{bF})}{r_{bF}}\right) - s_F \cdot w \cdot \cos\left(s_F \cdot \left(\frac{w}{r_{bF}} + \eta_{bF}\right) - \frac{z \cdot \tan(\beta_{bF})}{r_{bF}}\right) \\ r_{bF} \cdot \cos\left(s_F \cdot \left(\frac{w}{r_{bF}} + \eta_{bF}\right) - \frac{z \cdot \tan(\beta_{bF})}{r_{bF}}\right) + s_F \cdot w \cdot \sin\left(s_F \cdot \left(\frac{w}{r_{bF}} + \eta_{bF}\right) - \frac{z \cdot \tan(\beta_{bF})}{r_{bF}}\right) \\ z \end{pmatrix}$$

$$(3)$$

$\eta_{bF}$: siehe auch Anmeldung DE 10 2012 015 846 A1

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkzeug so abstimmen, dass auf dem Werkstück die gewünschte Modifikation erzeugt wird.

Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die x-Achse. Analog für $y$ und $z$
- $T_x(v)$ Translation um die Strecke $v$ in x-Richtung. Analog für $y$ und $z$
- $H(A_1,...,A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen. Die Verzahnungsmitte liegt bei $z = 0$.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \tag{4}$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- d: Achsabstand (Werkzeug/Werkstück)
- y: Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \tag{5}$$

- $\varphi_1$: Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- $d$: Maß für Achsabstand (Werkzeug/Werkstück)
- y: Achskreuzwinkel (Werkzeug/Werkstück)
- $\vartheta_1$: Konuswinkel Werkzeug
- $r_{w1}$: Wälzkreisradius des Werkzeugs

**Kinematische Kette für zylindrisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (6)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot$$
$$T_y(-r_{w2}) \cdot R_z(\varphi_2) \qquad (7)$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \dots, A_{N_s}) \text{ mit } N_s \geq 1 \qquad (8)$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \dots, A_{N_S}$ existieren, mit

$$H(A_1, \dots, A_{N_s}) = K_R \qquad (9)$$

Die Berechnung der Koordinaten $A_1, \dots, A_{N_S}$ kann mittels einer Koordinatentransformation durchgeführt werden.
Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \qquad (10)$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \qquad (11)$$

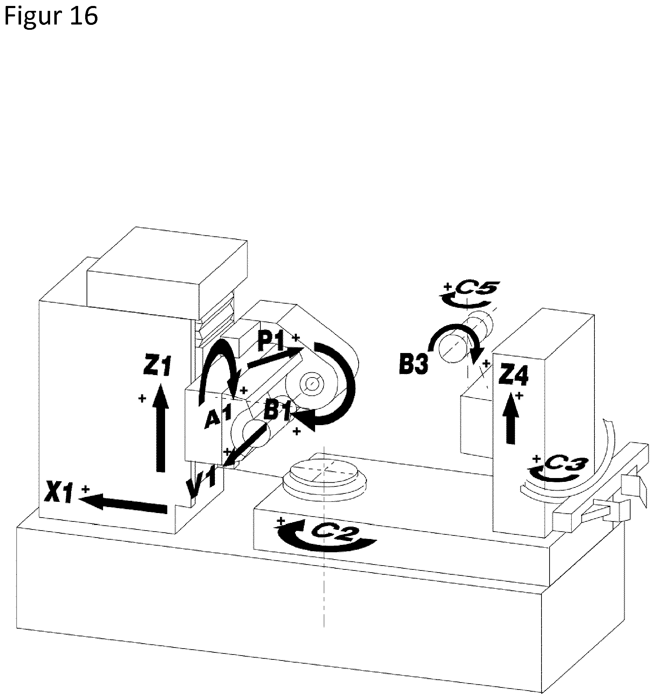

Figur 16 zeigt schematisch eine Verzahnmaschine mit einem durch $H_{Bsp1}$ beschriebenen Bewegungsapparat.

Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.

Wird im Diagonalwälzverfahren bearbeitet, wird zusätzlich die $z_{V1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.

Im weiteren Verlauf wird jedoch auch für zylindrische Werkzeuge bzw. Werkstücke für $z_{V1}$ bzw. $z_{V2}$ der Begriff Vorschub verwendet.

Wird mit einem konstanten Diagonalverhältnis geschliffen, so ist $z_{V1}$ eine Funktion von $z_{V2}$ und es gilt folgender Zusammenhang:

$$z_{V1}(z_{V2}) = K_{Z_{V1}} \cdot z_{V2} + z_{V01} \qquad (12)$$

$K_{Z_{V1}}$ ist hierbei das Diagonalverhältnis und $z_{V01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{Z_{V1}} \neq 0$ wird vom Diagonalwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg (w) und der Position in Breitenlinienrichtung (z) in Abhängigkeit der Vorschubpositionen $z_{V1}$ und $z_{V2}$.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben ebenfalls eine Modifikation gemäß Gleichung (1). Diese Art der Modifikation ist insbesondere bei abrichtbaren Schleifschnecken sehr vorteilhaft, da sich diese leicht beim Abrichten mit einer Abrichtscheibe auf der Schnecke erzeugen lässt. Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \tan \rho_{F1} + z_{F1} = X_{F1} \ . \qquad (13)$$

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

$X_{F1}$ definiert die Lage der Geraden auf der Schnecke. Während die Schnecke entlang ihrer Länge abgerichtet wird, verändert sich $X_{F1}$ entsprechend. Werden während des Abrichtvorgangs Korrekturen der Relativstellung zwischen Schnecke und Abrichtscheibe vorgenommen, so lassen sich Modifikationen auf der Schnecke aufbringen. Diese Korrekturen wirken sich immer entlang der aktuellen Berührlinie aus.

Die relative Lage zwischen Schnecke und Abrichter wird durch die folgende kinematische Kette $K_{BR}$ beschrieben:

$$K_{BR} = R_z(-\varphi_S) \cdot T_z(-z_S) \cdot R_x(-\gamma_B) \cdot T_x(-d) \cdot T_y(y_A) \cdot R_z(\varphi_A) \qquad (14)$$

- $\varphi_S$: Drehwinkel Schnecke
- $\varphi_A$: Drehwinkel Abrichter
- $y_A$: y-Position des Abrichters
- $z_S$: Axiale Position der Schnecke

- d: Achsabstand
- $\gamma_B$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1, \dots, B_{N_A}) \text{ mit } N_A \geq 1 \qquad (15)$$

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1, \dots, B_{N_A}$ existieren, mit

$$H(B_1, \dots, B_{N_A}) = K_{BR} \qquad (16)$$

Die Berechnung der Koordinaten $B_1,\dots,B_{N_A}$ kann mittels einer Koordinatentransformation durchgeführt werden.

Typische Bewegungsapparate, die alle geforderten Relativstellungen ermöglichen sind beispielsweise durch folgende kinematischen Ketten beschrieben:

$$H_{BBsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \qquad (17)$$

$$H_{BBsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \qquad (18)$$

Figur 16 zeigt schematisch eine Verzahnmaschine mit einem durch $H_{BBsp1}$ bzw. $H_{BBsp2}$ beschriebenen Bewegungsapparat.

- Achsabstand und/oder
- Axiale Position der Schnecke und/oder
- y-Position des Abrichters und/oder
- Drehwinkel der Schnecke und/oder
- Achskreuzwinkel zwischen der Schnecken- und der Abrichterachse

können so korrigiert werden, dass eine konstante Modifikation entlang der aktuellen Berührlinie erzeugt wird.

Wird eine Schnecke nicht modifiziert abgerichtet, so werden nur die axiale Position der Schnecke und über die Steigungshöhe der Schnecke gekoppelt der Drehwinkel der Schnecke während des Abrichtvorgangs verändert. Dadurch wandert die Berührlinie gemäß einer Schraubenline entlang der Schneckenlänge und überstreicht einen gewissen Bereich der Flanke und richtet diesen ab. $X_{F1}$ ist somit eine Funktion der axialen Position der Schnecke:

$$X_{F1} = X_{F1}(z_S) \qquad (19)$$

Dieser Zusammenhang gilt sowohl für das einflankige als auch für das zweiflankige Abrichten.

Wird zweiflankig abgerichtet, so können die Korrekturen der Relativstellung so gewählt werden, dass auf beiden Flanken der Schnecke unabhängig von einander in gewissen Grenzen beliebige konstante Modifikationen $f_{tf1}$ und $f_{tr1}$ entlang der aktuellen Berührlinien links und rechts aufgebracht werden. Diese, in gewissen Grenzen freie Wahl der Modifikationen auf linker und rechter Flanke rührt daher, dass die oben beschriebenen Korrekturen der Relativstellung sich nicht alle gleichsam auf linke und rechte Flanke auswirken. Beispielsweise führt eine Änderung des Achsabstands zu einer Modifikation auf linker und rechter Flanke mit gleichem Vorzeichen, im Fall einer symmetrischen zylindrischen Schnecke auch mit gleichem Betrag. Eine Änderung des Drehwinkels der Schnecke hingegen führt zu einer Modifikation auf linker und rechter Flanke mit unterschiedlichen Vorzeichen, im Fall einer symmetrischen zylindrischen Schnecke mit gleichem Betrag. Somit können beispielsweise Achsabstand und Drehwinkel der Schnecke so eingestellt werden, dass die gewünschten Modifikationen $f_{tf1}$ und $f_{tr1}$ entlang der aktuellen Berührline erreicht werden. Allgemein lässt sich dies wie folgt beschreiben: Verfügt die Maschine über einen, während des Abrichtvorgangs nutzbaren Bewegungsapparats mit den Koordinaten $B_1,...,B_{N_A}$, welcher die Relativstellung zwischen Schnecke und Abrichtscheibe verändern kann, sodass solche Korrekturen der Relativstellung möglich sind, welche eine freie Wahl der Modifikationen auf linker und rechter Flanke ermöglichen, so sind Korrekturen $\Delta B_1, ..., \Delta B_{N_A}$ dieser Koordinaten im Vergleich zum Abrichten einer unmodifizierten Schnecke abhängig von $f_{tl1}$ und $f_{tr1}$:

$$\Delta B_i = \Delta B_i(f_{tl1}, f_{tr1}) \text{ mit } 1 \leq i \leq N_A . \tag{20}$$

Wird eine Schnecke unmodifiziert abgerichtet, so wird nur die axiale Position der Schnecke $z_S$, wie oben beschreiben verändert. Diese Position wird durch die Koordinaten $B_1,...,B_{N_A}$ eingestellt, welche, für den Fall, somit eine Funktion von $z_S$ sind:

$$B_i = B_i(z_S) \text{ mit } 1 \leq i \leq N_A . \tag{21}$$

Aus den letzten beiden Beziehungen folgt für die Koordinaten $B_1,...,B_{N_A}$ beim Abrichten einer Schnecke mit den hier beschriebenen Modifikationen:

$$B_i = B_i(z_S) + \Delta B_i(f_{tl1}, f_{tr1}) \text{ mit } 1 \leq i \leq N_A . \tag{22}$$

Die Korrekturen der Koordinaten $\Delta B_1, ... , \Delta B_{N_A}$ verursachen im Allgemeinen neben der Modifikation auf der Schnecke auch eine leichte Verschiebung der Lage der aktuellen Berührline gegenüber dem Abrichten einer unmodifizierten Schnecke. Gleichung (19) muss für das Abrichten modifizierter Schnecken somit um eine Abhängigkeit von $\Delta B_1, ... , \Delta B_{N_A}$ erweitert werden:

$$X_{F1} = X_{F1}(z_S, \Delta B_1, ... , \Delta B_{N_A}) \tag{23}$$

Für das hier beschriebene Verfahren, werden Schnecken benötig, die eine Modifikation wie in Gleichung (1) beschrieben haben, wobei die Richtung $\rho_F$ durch die Richtung der Berührline beim Abrichten $\rho_{F1}$ vorgegeben ist. Die Funktion $F_{Ft1}$ ist jedoch in gewissen Grenzen eine frei vorgebbare stetige Funktion. Die oben definierten Modifikationen $f_{tl1}$ und $f_{tr1}$ beschreiben eine konstante Modifikation entlang der durch $\rho_{F1}$ definierten Richtung bei einer bestimmten Lage der Berührline $X_{F1}$ und entsprechen somit genau den Funktionen $F_{tl1}(X_{l1})$ und $F_{tr1}(X_{r1})$ für linke und rechte Flanke.

Sind die Modifikationen $F_{tl1}(X_{l1})$ und $F_{tr1}(X_{r1})$ bekannt, so lassen sich diese, zusammen mit Gleichung (20) in Gleichung (23) einsetzten:

$$X_{F1} = X_{F1}(z_S, \Delta B_1(F_{tl1}(X_{l1}), F_{tr1}(X_{r1})), ..., \Delta B_{N_A}(F_{tl1}(X_{l1}), F_{tr1}(X_{r1}))) \tag{24}$$

Mit diesem Gleichungssystem können zu gegebener axialer Position der Schnecke z die Lagen der Berührline $X_{F1}$, im allgemeinen numerisch, berechnet werden. Mit Gleichung (20) lassen sich damit dann die benötigten Korrekturen der Koordinaten $\Delta B_1, ..., \Delta B_{N_A}$ bestimmen. Diese Berechnung wird für alle $z_S$ durchgeführt, die nötig sind, um mit den Berührlinen auf linker und rechter Flanke den abzurichtenden Teil der Schnecke zu überstreichen.

Das hier für das zweiflankige Abrichten vorgestellte Verfahren lässt sich direkt auf das einflankige Abrichten übertragen. In dem Fall entkoppeln die Gleichungen für linke und rechte Flanke vollständig und die Berechnung kann für jede Flanke separat durchgeführt werden.

Eine Modifikation $f_{nF1}$ an einem Punkt auf der Schnecke, definiert in Normalenrichtung auf der Schneckengangoberfläche führt zu einer Modifikation $f_{nF2} = - f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos \beta_{bF} \tag{25}$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (1) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{V1}$ und $z_{V2}$ beschrieben. Dieser Verlauf hängt von den Grundkreisradien und Grundschrägungswinkeln des Werkstücks und der Schnecke sowie vom Achsabstand d und dem Achskreuzwinkel $\gamma$ ab. Die Relative Lage von Werkstück zu Schnecke wird bei dieser Betrachtung durch Gleichung (4) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1} \tag{26}$$

$$z_{F2} = C_{Fw2} \cdot w_{F2} - z_{V2} + C_{Fc2} \tag{27}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{28}$$

$$C_{Fc1} = C_{Fc1}(\beta_{bF1}, \beta_{bF2}, r_{bF1}, d, \gamma) \tag{29}$$

$$C_{Fw2} = C_{Fw2}(\beta_{bF2}) \tag{30}$$

$$C_{Fc2} = C_{Fc2}(\beta_{bF1}, \beta_{bF2}, r_{bF2}, d, \gamma) \tag{31}$$

Diese Relation zeigt auf, dass es einen linearen Zusammenhang zwischen $z_F$, $w_F$ und $z_V$ sowohl für Schnecke aus auch für Werkstück gibt.

Betrachtet man im Herstellprozesses alle Punkte auf dem Werkstück mit einen festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{32}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{33}$$

$$\hat{C}_{Fw2} = \hat{C}_{Fw2}(\beta_{bF2}) \tag{34}$$

$$\hat{C}_{Fc} = \hat{C}_{Fc}(\beta_{bF1}, r_{bF1}, \beta_{bF2}, r_{bF2}, d, \gamma) \tag{35}$$

Die gerade vorgestellten Relationen folgen direkt aus einer analytischen Berechnung der Berührpunkte zweier Evolventenverzahnungen, welche gemäß der kinematischen Kette aus Gleichung (4) zueinander orientiert sind.

Die Grundidee der Erfindung liegt nun darin, die obigen Beziehungen, zusammen mit dem konstanten Diagonalverhältnis aus Gleichung (12) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (1) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (26) und (27) nach $z_{V1}$ bzw. $z_{V2}$ aufgelöst und in Gleichung (12) eingesetzt, anschließend Gleichung (2) für Schnecke und Werkstück genutzt um $z_{F1}$ und $z_{F2}$ zu eliminieren und mit Gleichung (32) $w_{F1}$ ersetzt. Dies führt zu einer Relation der Form:

$$\bar{C}_{Fc} + \bar{C}_{Fw2} \cdot w_{F2} = 0 , \tag{36}$$

welche für alle $w_{F2}$ gelten muss. $\overline{C}_{Fw2}$ hat unter anderem ein Abhängigkeit von $K_{zv1} \cdot \overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{ZV1}$ sowohl für linke als auch für rechte Flanke berechnen, sowie $X_{F2}$ als Funktion von $X_{F1}$, ebenfalls für linke und rechte Flanke . $K_{ZV1}$, wie in Gleichung (12) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{l2} = \rho_{r2}$ führt diese Berechnung bei einer symmetrischen Verzahnung zu gleichen Diagonalverhältnissen $K_{ZV1}$ für linke und rechte Flanke. Somit ist ein zweiflankiges, abweichungsfreies Wälzschleifen möglich.

Ist jedoch $\rho_{l2} \neq \rho_{r2}$ und/oder die Verzahnung asymmetrisch, so führt die Berechnung im Allgemeinen zu unterschiedlichen Diagonalverhältnissen $K_{ZV1}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{ZV1}$ einzustellen sind. Gibt es ein Diagonalverhältnis $K_{ZV1}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

## Konisches Werkzeug und zylindrisches Werkstück

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (5) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (1) im Diagonalwälzverfahren verwendet, um auf dem Werkstück eine Modifikation ebenfalls gemäß Gleichung (1) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fc1} \tag{37}$$

$$z_{F2} = C_{Fw2} \cdot w_{F2} + C_{Fz_{V1}2} \cdot z_{V1} - z_{V2} + C_{Fc2} \tag{38}$$

Die hier eingeführten Koeffizienten $C_{Fw1}$, $C_{Fc1}$, $C_{Fw2}$, $C_{Fzv11}$, $C_{Fzv12}$ und $C_{Fc2}$ haben folgende Abhängigkeiten:

$$C_{Fw1} = C_{Fw1}(\beta_{bF1}) \tag{39}$$

$$C_{Fc1} = C_{Fc1}(\beta_{bF1}, \beta_{bF2}, r_{bF1}, d, \gamma, \vartheta_1) \tag{40}$$

$$C_{Fw2} = C_{Fw2}(\beta_{bF2}) \tag{41}$$

$$C_{Fc2} = C_{Fc2}(\beta_{bF1}, \beta_{bF2}, r_{bF2}, d, \gamma, \vartheta_1) \tag{42}$$

$$C_{Fz_{V1}1} = C_{Fz_{V1}1}(\beta_{bF1}, \beta_{bF2}, r_{bF1}, d, \gamma, \vartheta_1) \tag{43}$$

$$C_{Fz_{V1}2} = C_{Fz_{V1}2}(\beta_{bF1}, \beta_{bF2}, r_{bF2}, d, \gamma, \vartheta_1) \tag{44}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fc} = 0 \tag{45}$$

Die hier eingeführten Koeffizienten $\hat{C}_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{48}$$

$$\hat{C}_{Fc} = \hat{C}_{Fc}(\beta_{bF1}, r_{bF1}, \beta_{bF2}, r_{bF2}, d, \gamma, \vartheta_1) \tag{49}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (1) an, führt dies zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$. Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin mit einander kämmen und so ein Schraubwälzgetriebe bilden können. Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Z_{V1}}$ auf linker und rechter Flanke unterschiedlich. Diese unterschiedliche Beeinflussung erlaubt es, ein $\vartheta_1$ zu bestimmen, sodass $K_{Z_{V1}}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $\gamma$ den Wert $K_{Z_{V1}}$. Somit können zusätzlich zum Konuswinkel diese Größen variiert werden, um gleiches $K_{Z_{V1}}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

**Zylindrisches Werkzeug und konisches Werkstück**

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (1) aufweist. Schnecke und Werkstück bilden wieder ein Schraubwälzgetriebe, dessen Kinematik durch Gleichung (6) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V2}1} \cdot z_{V2} + C_{Fc1} \tag{50}$$

$$z_{F2} = C_{Fw2} \cdot w_{F2} + C_{Fz_{V2}2} \cdot z_{V2} + C_{Fc2} \tag{51}$$

Die hier eingeführten Koeffizienten $C_{Fw1}$, $C_{Fc1}$, $C_{Fw2}$, $C_{Fz_{V2}2}$, $C_{Fz_{V2}1}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_2) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_2) \tag{55}$$

$$C_{Fz_{V2}2} = C_{Fz_{V2}2}(\beta_{bF1}, \beta_{bF2}, r_{bF2}, d, \gamma, \vartheta_2) \tag{56}$$

$$C_{Fz_{V2}1} = C_{Fz_{V2}1}(\beta_{bF1}, \beta_{bF2}, r_{bF1}, d, \gamma, \vartheta_2) \tag{57}$$

Gleichung (32) wird ersetzt durch:

$$\hat{C}_{Fw1} \cdot w_{F1} + \hat{C}_{Fw2} \cdot w_{F2} + \hat{C}_{Fz_{V2}} \cdot z_{V2} + \hat{C}_{Fc} = 0 \tag{58}$$

Die hier eingeführten Koeffizienten $\hat{C}_{Fw1}$, $\hat{C}_{Fw2}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_{V2}} = \hat{C}_{Fz_{V2}}(\beta_{bF1}, r_{bF1}, \beta_{bF2}, r_{bF2}, \gamma, \vartheta_2) \tag{61}$$

$$\hat{C}_{Fc} = \hat{C}_{Fc}(\beta_{bF1}, r_{bF1}, \beta_{bF2}, r_{bF2}, d, \gamma, \vartheta_2) \tag{62}$$

Der bekannte Rechenansatz führt auch hier wieder zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für

linke und rechte Flanke, jedoch hat $K_{Z_{V1}}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{Z_{V1}}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{Z_{V1}}$, sodass $\rho_{F2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

**Konisches Werkzeug und konisches Werkstück**

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (7) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fz_{V2}1} \cdot z_{V2} + C_{Fc1} \tag{63}$$

$$z_{F2} = C_{Fw2} \cdot w_{F2} + C_{Fz_{V1}2} \cdot z_{V1} + C_{Fz_{V2}2} \cdot z_{V2} + C_{Fc2} \tag{64}$$

Die hier eingeführten Koeffizienten $C_{Fw1}$, $C_{Fc1}$, $C_{Fw2}$, $C_{Fz_{V2}2}$, $C_{Fz_{V2}1}$ , $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_1, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_1, \vartheta_2) \tag{68}$$

$$C_{Fz_{V2}2} = C_{Fz_{V2}2}(\beta_{bF1}, \beta_{bF2}, r_{bF2}, d, \gamma, \vartheta_1, \vartheta_2) \tag{69}$$

$$C_{Fz_{V2}1} = C_{Fz_{V2}1}(\beta_{bF1}, \beta_{bF2}, r_{bF1}, d, \gamma, \vartheta_1, \vartheta_2) \tag{70}$$

$$C_{Fz_{V1}2} = C_{Fz_{V1}2}(\beta_{bF1}, \beta_{bF2}, r_{bF2}, d, \gamma, \vartheta_1, \vartheta_2) \tag{71}$$

$$C_{Fz_{V1}1} = C_{Fz_{V1}1}(\beta_{bF1}, \beta_{bF2}, r_{bF1}, d, \gamma, \vartheta_1, \vartheta_2) \tag{72}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{73}$$

Die hier eingeführten Koeffizienten $\hat{C}_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{74}$$

$$\hat{C}_{Fw2} = \hat{C}_{Fw2}(\beta_{bF2}) \tag{75}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{76}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{77}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{78}$$

Der bekannte Rechenansatz führt auch hier wieder zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizienten-vergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch der Grundkreisradien und Grundschrägungswinkel das Diagonalverhältnis $K_{Z_{V1}}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{Z_{V1}}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{t1}(X_{F1})$ gegeben durch:

$$F_{Ft1}(X_{F1}) = -\frac{\cos\beta_{bF2}}{\cos\beta_{bF1}} \cdot F_{Ft2}(X_{F2}(X_{F1})) \tag{79}$$

$F_{Ft2}(X_{F2})$ beschreibt die Modifikation auf dem Werkstück gemäß Gleichung (1).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

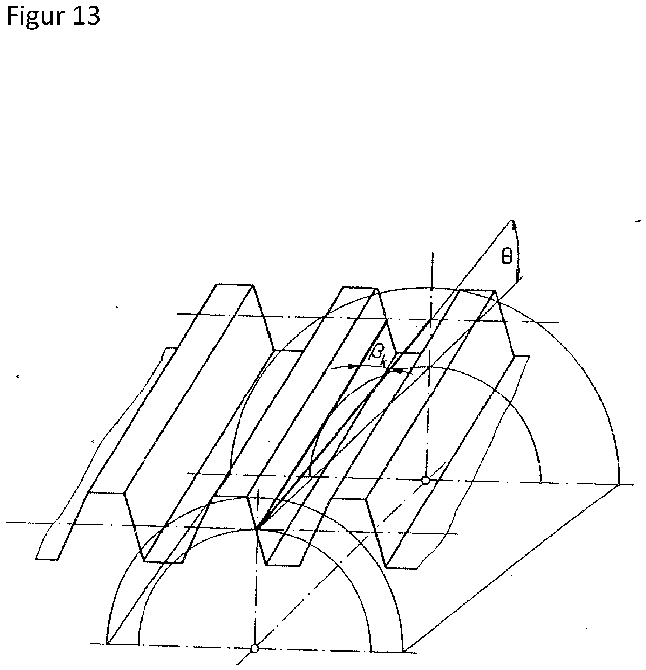

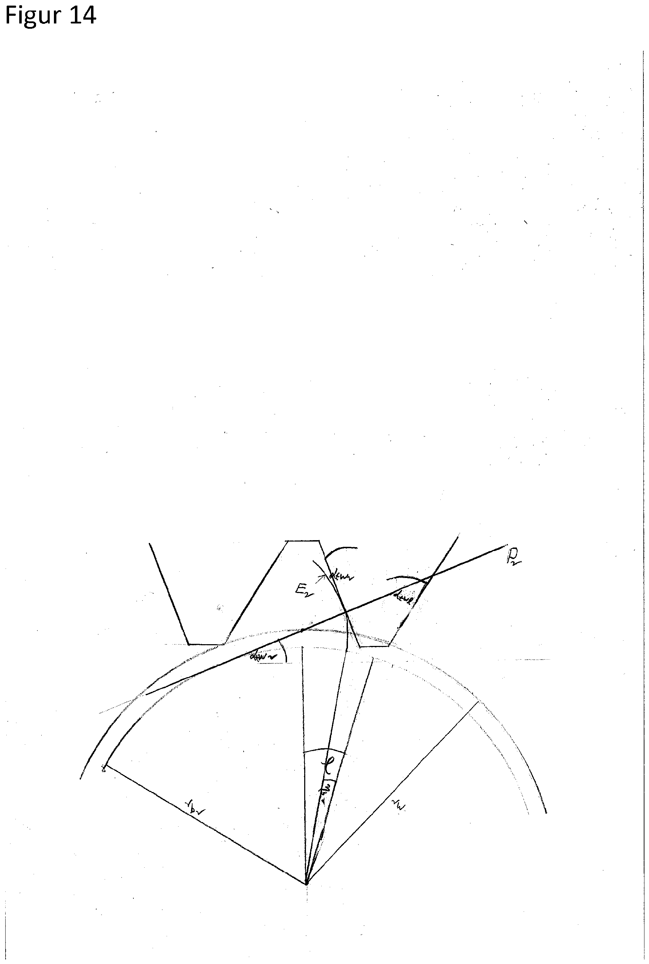

Figur 14 zeigt beispielhaft die Berührung einer rechten evolventischen Flanke mit einer generierenden Zahn-stange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 13). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über w und z aus der Parametrisierung in Gleichung (3), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigunghöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, z, $z_V$ und $\varphi$.

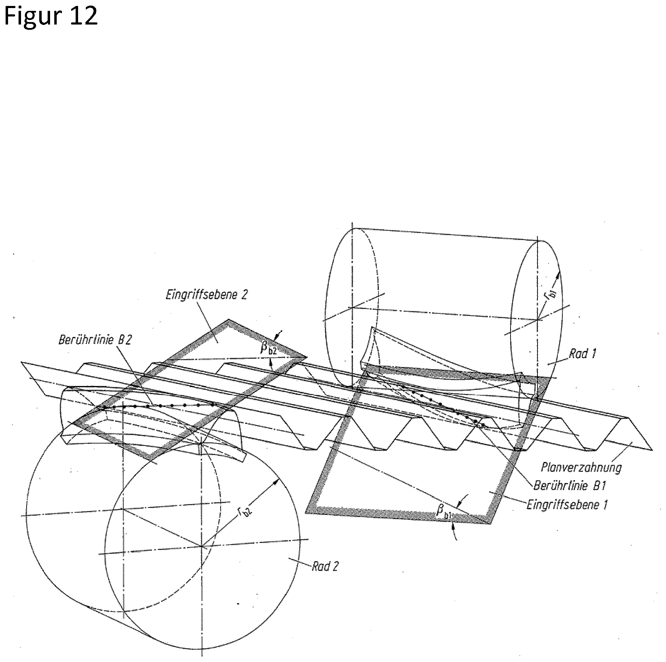

Werden zwei Verzahnungen in einem Schraubwälzgetriebe gepaart, so müssen deren beiden Zahnstangen zu jeder Zeit deckungsgleich sein, wie in Figur 12 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \qquad (80)$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten ($w_{F2}$, $z_{F2}$) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shift-position $z_{V2}$ des Werkstücks abgebrochen, so haben, für einen gegebenen Radius auf der Schnecke nur die Vektoren annähernd dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 15). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_v$ betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (26) bzw. (27), beispielsweise mittels einer Ausgleichsrechung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (32), beispielsweise mittels einer Ausgleichsrechung bestimmen.

Ist die Schnecke konisch und das Werkstück zylindrisch, so muss der Kontaktpfad für mindestens zwei verschiedene Vorschübe $z_{V1}$ bestimmt werden, um zusätzlich die Koeffizienten vor $z_{V1}$ in den Gleichungen (37), (38) und (45) zu bestimmen. Analog müssen mindestens zwei verschiedene Vorschübe $z_{V2}$ betrachtet werden, wenn Werkstück konisch und Schnecke zylindrisch sind. Sind Werkstück und Schnecke konisch, so müssen die Kontakpfade für mindestens zwei Vorschübe $z_{V1}$ und mindestens zwei Vorschübe $z_{V2}$ betrachtet werden, um alle Koeffizienten aus den Gleichungen (63), (64) und (73) zu bestimmen.

**Wahl der Makrogeometrie der Schnecke**

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten z-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

**Nicht konstantes Diagonalverhältnis**

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

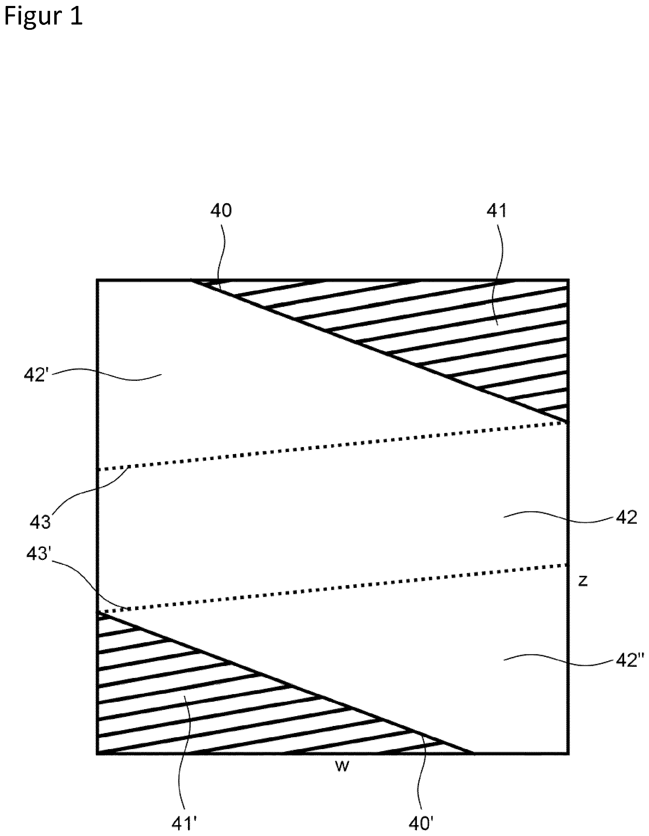

Figur 1 zeigt am Beispiel zweier Dreiecksförmigen Endrücknahme eine Aufteilung in modifizierte (41 und 41') und nicht modifizierte (42, 42', 42") Bereiche. Während der Verlauf des Kotaktpunkts (43 bzw. 43') den Bereich 42 überstreicht, kommen nur nicht modifizierte Bereiche der Schnecke in Eingriff. In diesem Bereiche kann das Diagonalverhältnis frei gewählt werden. Wird ein Bereich oberhalb 43 oder unterhalb 43' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

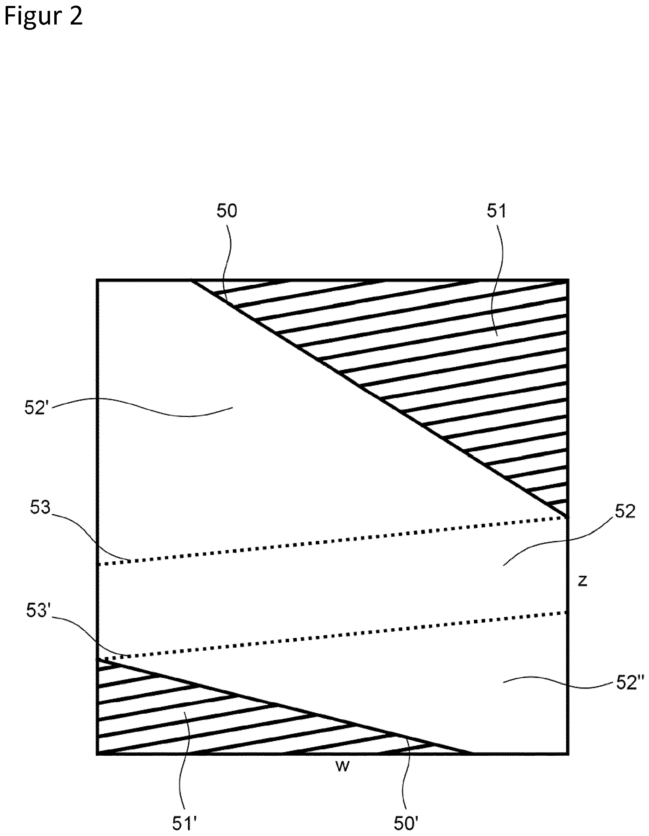

Figur 2 zeigt am Beispiel zweier Dreiecksförmigen Endrücknahme, welche in unterschiedliche Richtungen verlaufen, eine Aufteilung in modifizierte (51 und 51') und nicht modifizierte (52, 52', 52") Bereiche. Die Richtungen $\rho_{F2}$ (50 bzw. 50') der Modifikationen gemäß Gleichung (1) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (53 bzw. 53') den Bereich 52 überstreicht, kann das Diagonalverhältnis frei gewählt werden. Um die Modifikation abweichnungsfrei herstellen zu können, müssen die Geraden 53 und 53' auf gleicher Höhe liegen oder 53 über 53'. Liegt jedoch 53' über 53 so verläuft der Kontaktpunkt sowohl über den Bereich 51 als auch über den Bereich 51', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (12) durch eine, im Allgemeinen nicht lineare Variante ersetzt:

$$z_{V1}(z_{V2}) = F_{Z_{V1}}(z_{V2}) \tag{81}$$

Hierbei ist $F_{Z_{V1}}$ eine beliebige stetige Funktion, welche eine Relation zwischen $z_{V1}$ und $z_{V2}$ beschreibt. Das Diagonalverhältnis ist durch die Ableitung von $F_{Z_{V1}}(z_{V2})$ nach $z_{V2}$ gegeben und somit im Allgemeinen nicht konstant. Ist $F_{Z_{V1}}$ nicht linear, so werden Geraden auf der Schnecke im w-z-Diagramm nicht mehr auf Geraden auf dem Werkstück im w-z-Diagramm abgebildet. Die Kurve, welche den Verlauf der Punkte im w-z-Diagramm auf dem Werkstück beschreibt, welche auf eine durch $X_{F1}$ definierte Gerade auf der Schnecke abgebildet werden, kann durch eine Funktion $z_{F2}(w_{F2},X_{F1})$ beschrieben werden. Für den allgemeinsten Fall eines konischen Werkstücks und einer konischen Schnecke, erhält man eine Relation (R20) zwischen $F_{Z_{V1}}(z_{V2})$, $z_{F2}(w_{F2},X_{F1})$, $w_{F2}$ und $X_{F1}$, indem man das Gleichungssystem aus Gleichung (63) und (64) nach $z_{V1}$ und $z_{V2}$ auflöst, die beiden Vorschübe in Gleichung (81) einsetzt und anschließend $z_{F1}$ und $w_{F1}$ mit Hilfe der Gleichungen (13) und (73) ersetzt. Mit dieser Relation lässt sich für eine gegebene Funktion $F_{Z_{V1}}$ für jedes $X_{F1}$ der durch $z_{F2}(w_{F2},X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$ gegebenem Verlauf $z_{F2}(w_{F2},X_{F1})$ die Funktion $F_{Z_{V1}}(z_{V2})$ bestimmt werden. Des Weiteren kann aus der Relation (R20) eine Funktion $F_{X_{F1}}(w_{F2}, z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

Wird für ein $X_{F1}$ nur der Teil des Verlaufs betrachtet, welcher auf der Flanke, d.h. innerhalb des w-z-Diagramms liegt, so definiert dies im Allgemeinen die Funktion $F_{Z_{V1}}(z_{V2})$ nicht für alle Werte von $z_{V2}$, da für andere Vorschubpositionen des Werkstücks, Teile des dann aktuellen Verlaufs die Flanke überstreichen, welche für $X_{F1}$ noch außerhalb des Diagramms lagen. Figur 3a zeigt dies beispielhaft für ein zylindrisches Werkstück. Dies kann genutzt werden, um $F_{ZV1}(z_{V2})$ abschnittsweise aus den Verläufen für verschiedene $X_{F1}$ zusammenzusetzten, bzw. den Definitionsbereich zu erweitern. Alternativ ist es auch möglich, $F_{ZV1}(z_{V2})$ aus einem Verlauf für ein $X_{F1}$, welcher über die Grenzen des w-z-Diagramm hinaus fortgesetzt wurde zu bestimmen. Diese Verlauf wird vorteilhafterweise soweit fortgesetzt, dass jeder Teil des w-z-Diagramme von dem Verlauf überstrichen wird. Figur 3a zeigt wie ein solcher Verlauf gewählt werden kann. In diesem Beispiel kann die Funktion $F_{ZV1}(z_{V2})$ dann aus einem der vier Verläufe 60-63 bestimmt werden.

Insbesondere wenn $F_{ZV1}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{F1}$ verändert. Für den allgemeinen Fall berechnet sich dies durch die Schritte:

- Berechnen von $F_{ZV1}(z_{V2})$ aus dem Verlauf für ein $X_{F1}$
- Berechnen des Verlauf für ein anderes $X_{F1}$ aus dem zuvor bestimmten $F_{ZV1}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 3 ist diese Richtung durch die beiden parallelen Geraden 65 und 66 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bF1}$, $\vartheta_1$) und Achskreuzwinkel beeinflusst werden. Der Zusammenhang lässt sich in dem Fall jedoch nicht mehr leicht anschaulich beschreiben und muss durch die oben beschriebenen Schritte ermittelt werden.

Wird einflankig Wälzgeschliffen, so kann $F_{ZV1}(z_{V2})$ und somit der Verlauf für jede Flanke separat vorgegeben werden.

Wird zweiflankig Wälzgeschliffen, so beeinflusst ein $F_{ZV1}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{ZV1}(z_{V2})$ aus dem Verlauf von Flanke 1
- Berechnen des Verlaufs von Flanke 2 aus $F_{ZV1}(z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bF1}$, $\vartheta_1$) und Achskreuzwinkel und Achsabstand. Diese Beeinflussung kann genutzt werden, um $F_{ZV1}(z_{V2})$, die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (1), so ist der Wert der Modifikation auf dem Werkstück entlang eines Verlaufs $z_{F2}(w_{F2}, X_{F1})$ gleich :

$$-\frac{\cos \beta_{bF1}}{\cos \beta_{bF2}} \cdot F_{Ft1}(X_{F1}) \tag{82}$$

Sind die Werte der Modifikation für alle Verläufe auf dem Werkstück bekannt, so ergibt sich daraus die Funktion $F_{Ft1}(X_{F1})$, welche die Modifikation auf der Schnecke definiert. Parametrisiert über $w_{F2}$ und $z_{F2}$ kann die Modifikation $f_{Ft2}(w_{F2}, z_{F2})$ auf dem Werkstück geschrieben werden als:

$$f_{Ft2}(w_{F2}, z_{F2}) = -\frac{\cos \beta_{bF1}}{\cos \beta_{bF2}} \cdot F_{Ft1}(F_{X_{F1}}(w_{F2}, z_{F2})) \tag{83}$$

Ein konkretes Anwendungsbeispiel ist in Figur 4 gezeigt. Die Modifikation ist so gewählt, dass sie die Kombination aus einer Dreiecksförmigen Endrücknahme und einer Endrücknahme in Flankenlinienrichtung annähert. Der Übergang zwischen dem Beginn der beiden Rücknahmen ist hier beispielhaft tangential gewählt, wodurch der Verlauf 70 durch eine differenzierbare Kurve gegeben ist. Der Wert der Modifikation entlang 70 ist hier gleich 0 gewählt. Der Wert der Modifikation fällt in Richtung des Verlaufs 71 ab. Da der Abstand zwischen 70 und 71 im Bereich der Endrücknahme in Flankenlinienrichtung kleiner ist, als der Abstand zwischen 70 und 71 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (75 bzw. 76) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

**Überlagerung mit anderen Modifikationen**

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen nur vom Wälzweg und nicht von der z-Position ab. Mathematisch beschrieben werden können sie durch folgende Gleichung:

$$f_{PFt} = f_{PFt}(w_F) \qquad (84)$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (1) additiv überlagern. Beim Wälzschleifen mit abrichtbaren Schnecken wird diese Modifikation in der Regel in den Abrichter gelegt. Der Abrichtprozess kann dann unverändert durchgeführt werden und die Profilmodifikationen bilden sich, wie gewünscht auf der Schnecke und später beim Schleifen auf dem Werkstück ab.

Eine weitere, aus dem Stand der Technik [DE10208531] bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die mit dieser Methode erzeugbaren Modifikationen können somit auch durch Gleichung (1) beschreiben werden. Die durch $\rho_{KF}$ gegebene Richtung kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{KFt}(w_F, z_F) = F_{KFt}(w_F \tan \rho_{KF} + z_F) \qquad (85)$$

Hierbei können die Funktionen $F_{KFt}$ beliebige stetige Funktionen sein. Aus den Funktionen $F_{KFt}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (85) störungsfrei additiv überlagert werden.

Zusammengefasst lassen sich die herstellbaren Modifikationen $f_{GFt}$ wie folgt beschreiben:

$$f_{GFt}(w_F, z_F) = F_{Ft}(w_F \tan \rho_F + z_F) + f_{PFt}(w_F) + F_{KFt}(w_F \tan \rho_{KF} + z_F) \qquad (86)$$

wobei $F_{Ft}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{Ft}$, $f_{PFt}$ und $F_{KFt}$ konstant, insbesondere 0 ist.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (86) zerlegt werden. Dazu werden die Funktionen $F_{Ft}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten ($w_{Fi}$, $z_{Fi}$) oder kontinuierlich über das ganze w-z-Diagramm berechnet werden. Die kontinuierliche Berechnung der Abweichung kann beispielsweise mit Hilfe eines Integrals einer Abstandsfunktion über alle Werte von w und z durchgeführt werden. Möglich ist es auch, die Abweichungen abhängig von der Position der Punkte in einem w-z-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwenden.

Die gewünschte Modifikation kann beispielsweise durch eine stetige Funktion $f_F$ , durch eine Punktewolke ($w_{Fj}$, $z_{Fj}$, $f_{Fj}$) oder eine Kombination aus beidem gegeben sein. Die Funktionen $F_{Ft}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten ($w_{Fk}$, $z_{Fk}$) zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die Richtungen $\rho_F$ einzuschränken. Im Allgemeinen kann die in der Ausgleichsrechnung verwendete und zu minimierende Abstandsfunktion, neben der Abweichung zwischen $f_{GFT}$ und $f_F$ auch von technologischen Größen abhängen: Wird das Verfahren mit nicht konstantem Diagonalverhältnis angewendet, so muss Gleichung (86) dahingehend modifiziert werden, dass $F_{Ft}$ durch eine Modifikation gemäß Gleichung (83) zu ersetzten ist. Soll durch eine Ausgleichsrechnung eine gegeben Modifikation durch eine so zusammengesetzte Modifikation angenähert bzw. exakt in eine solche zerlegt werden, können die Funktionen $F_{Ft1}$, $F_{ZV1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{ZV1}$ für linke und rechte Flanke gleich. Die Funktionen $F_{Ft1}$, $f_{PFt}$ und $F_{KFt}$ sind für linke und rechte Flanke, sowohl beim einflankigen aus auch beim zweiflankigen Schleifen im Allgemeinen verschieden.

**Aufteilung des Werkzeugs**

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung. Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

**Übertragbarkeit auf andere Fertigungsverfahren**

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (1) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.

Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (1) aufweisen. Je nach Fertigungsverfahren des Werkzeugs, ist auch hier eine freie Wahl von $\rho_F$ auf dem Werkzeug möglich.

**Anwendungsbeispiele**

Im Folgenden werden einige Anwendungsbeispiele beschrieben, an denen auch der Vorteil der hier beschriebenen Erfindung gegenüber dem Stand der Technik aufgezeigt wird.

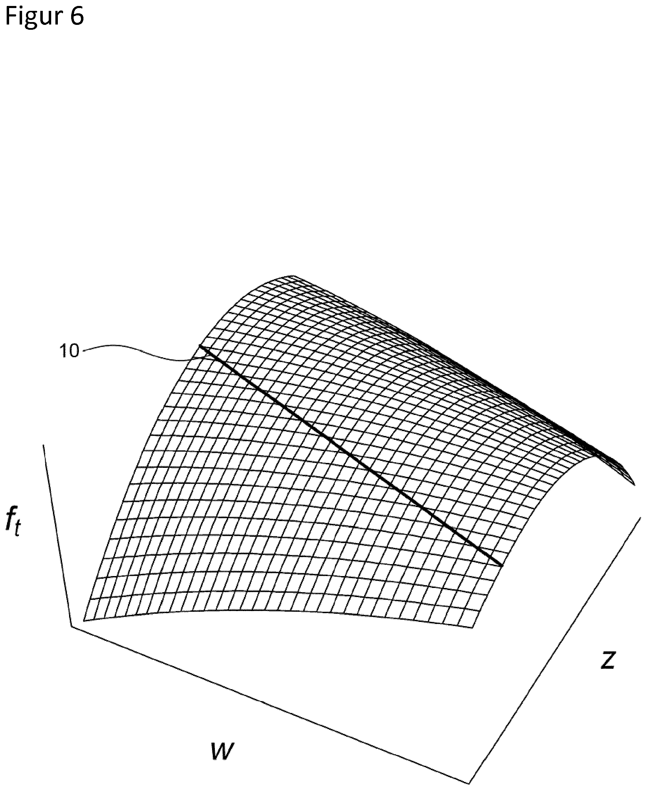

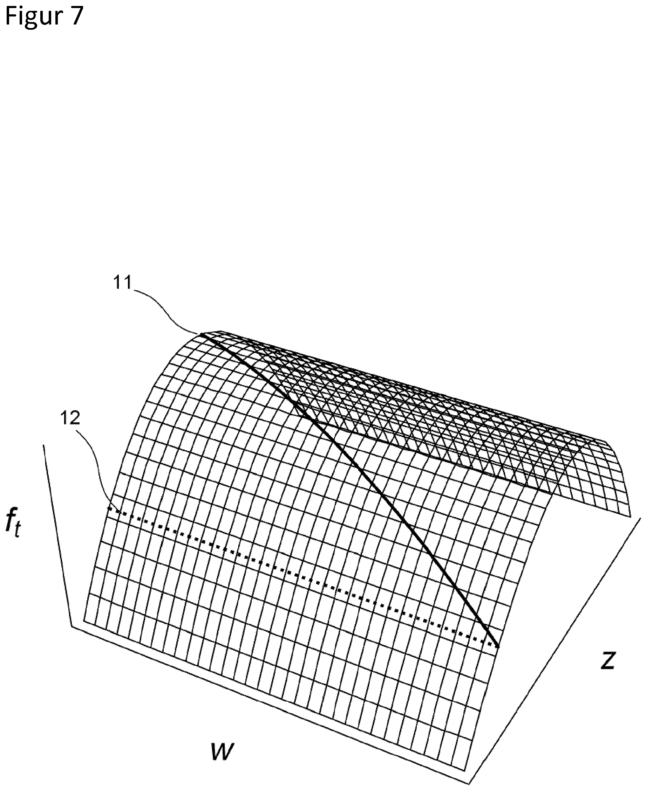

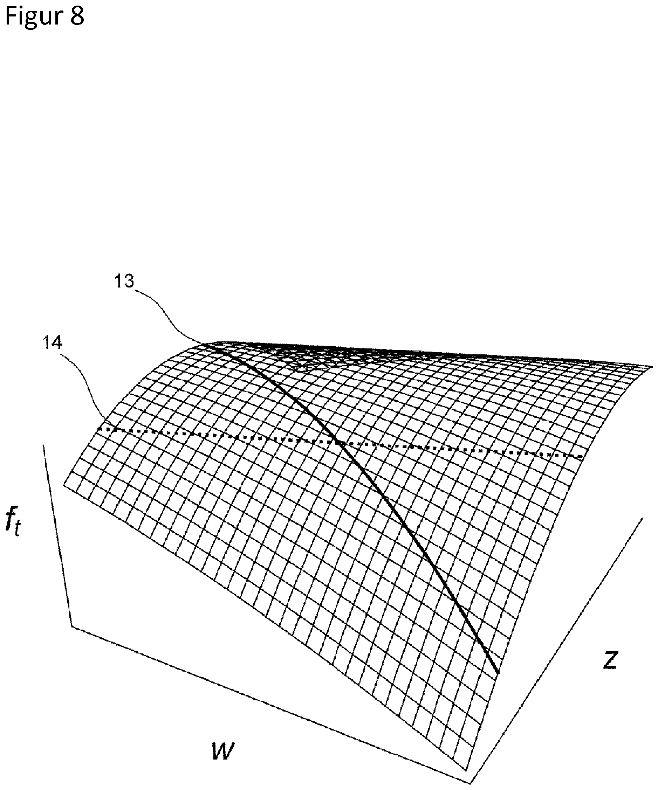

Figur 6 zeigt eine natürlich verschränkte Flankenlinienballigkeit, wie diese durch eine reine Korrektur der Schleifkinematik erzeugt werden kann. Die Richtung, entlang der die erzeugte Modifikation konstant ist, ist durch den Kontaktpfad 10 gegeben. Mit dem hier beschriebenen Verfahren, kann diese Richtung jedoch frei gewählt werden. Um eine reine, nicht verzerrte Flankenlinienballigkeit zu erzeugen, wird, wie in Figur 7 gezeigt, die Richtung so gewählt, dass die Linie mit konstanter Modifikation 12 parallel zur w-Achse verläuft. Die entlang des Kontaktpfads 11 erzeugte Modifikation hat keinen konstanten Wert. Die Richtung konstanter Modifikation kann jedoch auch beliebig gewählt werden, sodass eine, wie in Figur 8 gezeigte, in eine gezielte Richtung laufende Balligkeit erzeugt werden kann. Solche Balligkeiten erzeugen eine gezielte Verschränkung und sind, wie nicht verschränkte Flankenlinienballigkeiten, frei von Formabweichungen.

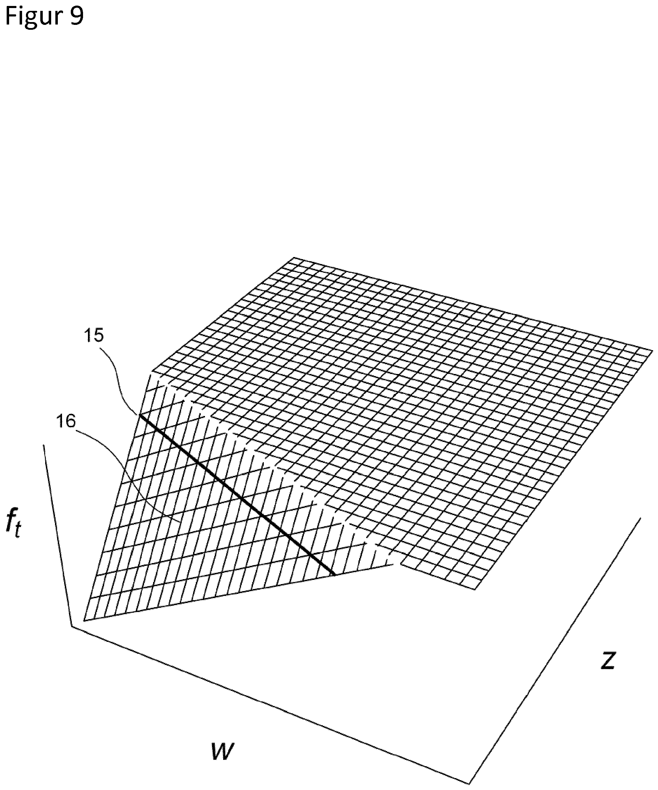

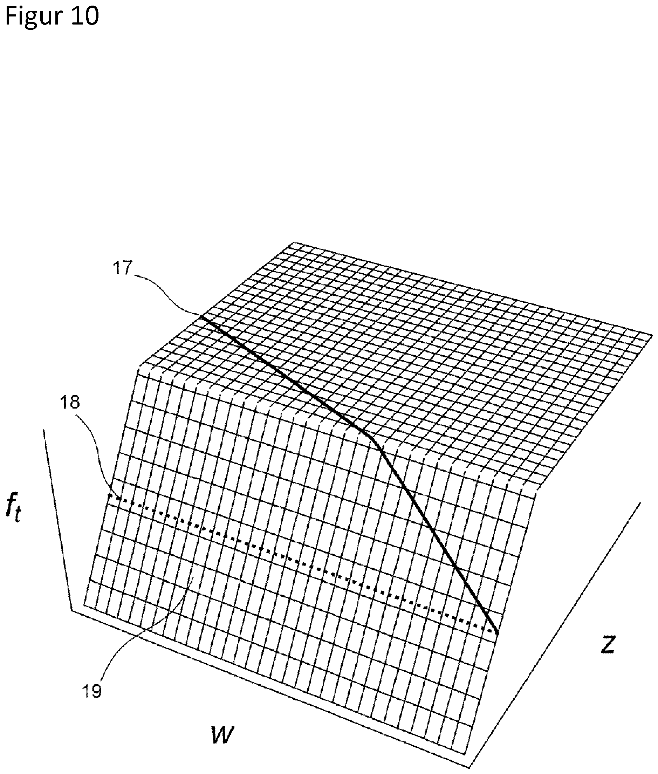

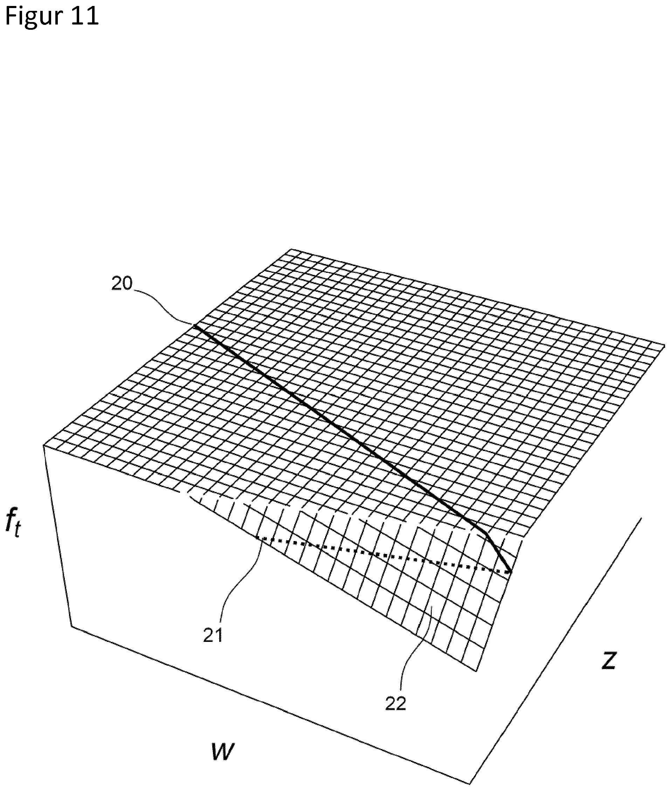

Ein weiteres Anwendungsbeispiel sind Endrücknahmen. Diese können gemäß dem Stand der Technik nur in verzerrter Form 16, wie in Figur 9 gezeigt, durch korrigierte Schleifkinematik gefertigt werden. Die Linie konstanter Modifikation verläuft entlang des Kontaktpfads 15. Gewünscht ist jedoch ein Verlauf dieser Linie parallel zur w-Achse, wie 18 in Figur 10 zeigt, was mit dem hier beschriebenen Verfahren möglich gemacht wird. Dies führt zu einer nicht verzerrten Endrücknahme 19. Eine Variation der Endrücknahmen sind dreieckförmige Endrücknahmen 22, wie in Figur 11 gezeigt. Die Linie konstanter Modifikation 21 verläuft hier in einer gezielt vorgegebenen Richtung, typischerweise parallel zur Eingriffsline der Verzahnung. Die hier dargestellten Endrücknahmen und dreiecksförmigen Endrücknahmen haben lineare Verläufe ohne Übergangsbereiche. Möglich sind hier jedoch auch beispielsweise kreisförmige, logarithmische, parabelförmige und exponentielle Verläufe, mit und ohne Übergangsbereich oder auch jede andere Form des Verlaufs.

**Patentansprüche**

1. Verfahren zur Verzahnbearbeitung eines Werkstückes durch ein Diagonalwälzverfahren, bei welchem das Werkstück durch das Abwälzen eines Werkzeuges verzahnbearbeitet wird, wobei während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt, wobei
**dadurch gekennzeichnet,**
**dass** im Rahmen der Bearbeitung eines Werkstückes das Diagonalverhältnis verändert wird, wobei das Diagonalverhältnis während der Bearbeitung des Werkstückes in Abhängigkeit von dem Axialvorschub des Werkstückes und/oder Werkzeuges variiert wird.

2. Verfahren nach Anspruch 1, wobei das Diagonalverhältnis zumindest in einem Bereich des Axialvorschubs als eine nicht-konstante Funktion des Axialvorschubs gegeben ist, welche zumindest einen Bereich aufweist, in dem sie einen stetigen nicht-konstanten Verlauf aufweist, und/oder wobei das Werkzeug mindestens einen modifizierten und einen unmodifizierten Bereich und/oder mindestens zwei Bereiche mit Modifikationen mit unterschiedlicher Ausrichtung aufweist.

3. Verfahren nach Anspruch 1 oder 2 zur Herstellung eines Werkstückes mit korrigierter Verzahnungsgeometrie und/oder modifizierter Oberflächenstruktur, wobei mittels einer gezielten Modifikation der Oberflächengeometrie des Werkzeuges und einer durch das Diagonalwälzverfahren erzeugten, vom Diagonalverhältnis abhängigen Abbildung der Oberfläche des Werkzeugs auf die Oberfläche des Werkstücks eine entsprechende Modifikation auf der Oberfläche des Werkstückes erzeugt wird,

    wobei bevorzugt eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder
    wobei die Modifikation der Oberflächengeometrie des Werkstückes auf der Zahnflanke im Wälzbild zumindest lokal und/oder in einem ersten Bereich in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
    und/oder die zur Herstellung der Modifikation der Oberflächengeometrie des Werkstückes verwendete Modifikation der Oberflächengeometrie des Werkzeuges im Wälzbild zumindest lokal und/oder in einem ersten Bereich in einer ersten Richtung des Werkzeuges einen konstanten Wert aufweist und weiterhin bevorzugt in einer zweiten Richtung des Werkzeuges, welche senkrecht zur ersten Richtung verläuft, durch eine Funktion $F_{Ft1}$ gegeben ist, wobei bevorzugt die Funktion auf dem Werkzeug die gleiche, gegebenenfalls linear um einen Faktor gestauchte Funktion ist wie die Funktion auf dem Werkstück,

wobei bevorzugt die Makrogeometrie des Werkzeuges und/oder die Eingrifflinie des Abrichtwerkzeuges und/oder das Diagonalverhältnis und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht.

4. Verfahren nach einem der vorangegangenen Ansprüche, wobei zur Bearbeitung unterschiedlicher Bereiche des Werkstückes und/oder bei der Verwendung unterschiedlicher Bereiche des Werkzeuges mit unterschiedlichen Diagonalverhältnissen gearbeitet wird, und/oder wobei das Diagonalverhältnis verändert wird, während im Rahmen der Verzahnbearbeitung die Breite der Verzahnung abgefahren wird, wobei bevorzugt innerhalb der jeweiligen Bereiche mit einem konstantem Diagonalverhältnis gearbeitet wird.

5. Verfahren nach Anspruch 1 oder 2, wobei der Verlauf mindestens einer Linie konstanter Modifikation vorgeben wird und hieraus die Variation des Diagonalverhältnisses in Abhängigkeit vom Axialvorschubs und insbesondere die nichtkonstante Funktion, durch welche dieser gegeben ist, bestimmt wird, und/oder wobei die Variation des Diagonalverhältnisses beim Überstreichen eines modifizierten Bereichs des Werkstücks erfolgt.

6. Verfahren nach einem der vorangegangenen Ansprüche, wobei bei welchem eine Veränderung des Diagonalverhältnisses erfolgt, während das Werkzeug am Werkstück in Breitenrichtung entlanggeführt wird, wobei das Werkzeug eine konische Grundform aufweist, wobei bevorzugt die durch die Veränderung des Diagonalverhältnisses erzielbaren Modifikationen durch eine geeignete Wahl mindestens eines und bevorzugt mehrerer Parameters des Bearbeitungsvorgangs und/oder der Makrogeometrie des Werkzeuges, insbesondere des Achskreuzwinkels und/oder des Achsabstands und/oder des Konuswinkels und/oder des Profilwinkels des Werkzeuges, gezielt beeinflusst werden.

7. Verfahren nach einem der vorangegangenen Ansprüche, wobei das Werkzeug zwei modifizierte Bereiche, zwischen welchen ein unmodifizierter Bereich liegt, aufweist, und/oder wobei in mindestens zwei Bereichen mit unterschiedlichen Diagonalverhältnissen gearbeitet wird.

8. Verfahren nach einem der vorangegangenen Ansprüche, wobei das Werkzeug mindestens zwei Bereiche aufweist, welche nacheinander zur Bearbeitung des gleichen Bereichs des Werkstückes eingesetzt werden, insbesondere mindestens einen Schrupp- und mindestens einen Schlichtbereich, wobei die Bearbeitungsschritte mit den beiden Bereichen, insbesondere der Schruppschnitt und der Schlichtschritt, mit unterschiedlichen Diagonalverhältnissen erfolgen, wobei bevorzugt die zur Bearbeitung eingesetzten Bereiche die gesamte Werkzeugbreite nutzen, und/oder wobei bevorzugt zumindest ein Bereich, insbesondere der Schlichtbereich, modifiziert ist, wobei für den Fall, dass beide Bereiche, insbesondere sowohl der Schrupp- als auch Schlichtbereich, modifiziert sind, die Modifikation jeweils eine unterschiedliche Ausrichtung aufweist, und/oder die Modifikation auf dem Schruppbereich nur näherungsweise zu der gewünschten Modifikation auf der Verzahnung führt.

9. Verfahren nach einem der vorangegangenen Ansprüche, wobei das Werkzeug mindestens zwei Bereiche aufweist, welche nacheinander zur Bearbeitung unterschiedlicher Bereiche des Werkstückes eingesetzt werden, wobei die Bearbeitung in dem einen Bereich mit einem anderen Diagonalverhältnis erfolgt als in dem anderen Bereich, wobei das Werkzeug bevorzugt einen modifizierten und einen unmodifizierten Bereich aufweist, wobei bevorzugt das Diagonalverhältnis in dem unmodifizierten Bereich kleiner ist als im modifizierten Bereich, um die Breite des Werkzeuges zu verringern, oder wobei das Diagonalverhältnis in dem unmodifizierten Bereich größer ist als im modifizierten Bereich, um in diesem Bereich die Belastung des Werkzeuges zu verringern.

10. Verfahren nach einem der vorangegangenen Ansprüche, wobei das Werkzeug zwei modifizierte Bereiche, zwischen welchen ein unmodifizierter Bereich liegt, aufweist, welche nacheinander zur Bearbeitung unterschiedlicher Bereiche des Werkstückes eingesetzt werden, wobei zumindest in den modifizierten Bereichen mit unterschiedlichen Diagonalverhältnissen gearbeitet wird, um in den jeweiligen Bereichen des Werkstückes unterschiedliche Modifikationen, insbesondere Modifikationen mit unterschiedlicher Ausrichtung, zu erzeugen, wobei die Bereiche bevorzugt so angeordnet sind, dass der Verlauf des Kontaktpunktes zwischen Werkzeug und Werkstück in mindestens einer Schleifposition komplett im unmodifizierten Bereich liegt.

11. Verfahren nach Anspruch 10, wobei die beiden modifizierten Bereiche der Schleifschnecke unterschiedlich modifiziert sind, und insbesondere Modifikationen mit unterschiedlicher Ausrichtung aufweisen., und/oder wobei die Schleifschnecke eine konische Grundform aufweist, wobei der Konuswinkel des Werkzeuges größer 1', bevorzugt größer 30', weiter bevorzugt größer 1° ist und/oder wobei der Konuswinkel der Schleifschnecke kleiner 50°, bevorzugt kleiner 20°, weiter bevorzugt kleiner 10° ist.

12. Verfahren nach einem der Ansprüche 1 bis 11, wobei ein Abrichten zur Bereitstellung des Werkzeuges erfolgt, wobei die gewünschte Modifikation des Werkzeuges durch eine Veränderung der Maschinenkinematik während des Abrichtprozesses erzeugt wird, insbesondere dadurch, dass die Position des Abrichters relativ zum Werkzeug abhängig von dem Werkzeugdrehwinkel und/oder der Werkzeugbreitenposition variiert wird, wobei mindestens ein modifizierter Bereich und mindestens ein unmodifizierter Bereich und/oder mindestens zwei Bereiche mit unterschiedlichen Modifikationen erzeugt werden.

13. Verzahnmaschine zur Durchführung des Verfahrens nach einem der Ansprüche 1 bis 12, wobei die Verzahnmaschine eine Ansteuerungsfunktion umfasst, welche ausgebildet ist, im Rahmen der Bearbeitung eines Werkstückes zur Durchführung eines Verfahrens nach einem der Ansprüche 1 bis 12 das Diagonalverhältnis zu verändern, wobei das Diagonalverhältnis während der Bearbeitung des Werkstückes in Abhängigkeit von dem Axialvorschub des Werkstückes und/oder Werkzeuges variiert wird.

14. Verzahnmaschine nach Anspruch 13, wobei die Verzahnmaschine eine Eingabe- und/oder Berechnungsfunktion aufweist, über welche unterschiedliche Diagonalverhältnisse und/oder ein variables Diagonalverhältnis vorgebbar und/oder bestimmbar sind, und/oder wobei die Steuerungsfunktion mindestens zwei nacheinander erfolgende Bearbeitungsschritte durchführt, bei welchen ein jeweils anderer Bereich des Werkzeuges zur Bearbeitung des gleichen Bereichs des Werkstückes eingesetzt werden, insbesondere mindestens einen Schrupp- und mindestens einen Schlichtschritt durchführt, wobei die Bearbeitungsschritte, insbesondere der Schruppschritt und der Schlichtschritt, mit unterschiedlichen Diagonalverhältnissen erfolgen.

15. Verzahnmaschine nach Anspruch 13 oder 14, wobei die Steuerungsfunktion im Verlauf eines Bearbeitungsschrittes mindestens einmal das Diagonalverhältnis ändert und/oder das Diagonalverhältnis verändert wird, während im Rahmen der Verzahnbearbeitung die Breite der Verzahnung abgefahren wird, wobei die Steuerungsfunktion bevorzugt zur Bearbeitung unterschiedlicher Bereiche des Werkstückes mit unterschiedlichen Diagonalverhältnissen arbeitet, und weiter bevorzugt innerhalb der jeweiligen Bereiche mit einem konstantem Diagonalverhältnis arbeitet, und/oder wobei die Steuerungsfunktion das Diagonalverhältnis während der Bearbeitung des Werkstückes in Abhängigkeit von dem Axialvorschub des Werkstückes und/oder Werkzeuges variiert, wobei das Diagonalverhältnis zumindest in einem Bereich des Axialvorschubs als eine nichtkonstante und stetige Funktion des Axialvorschubs gegeben ist.

## Claims

1. A method for the gear manufacturing machining of a workpiece by a diagonalgenerating method, in which the workpiece is subjected to gear tooth machining by the rolling off of a tool, wherein an axial feed of the tool takes place during the machining, with a diagonal ratio given by the ratio between the axial feed of the tool and the axial feed of the workpiece, wherein

   **characterized in that**
   the diagonal ratio is changed within the course of the machining of a workpiece, wherein the diagonal ratio is varied during the machining of the workpiece in dependence on the axial feed of the workpiece and/or of the tool.

2. A method in accordance with claim 1, wherein the diagonal ratio is given as a non-constant function of the axial feed, at least in a region of the axial feed, which has at least one region in which it has a steady non-constant extent, and/or wherein the tool has at least one modified and one unmodified region, and/or at least two regions having different modifications having different orientations.

3. A method in accordance with claim 1 or claim 2 for the production of a workpiece with a corrected gear tooth geometry and/or a modified surface structure, wherein a corresponding modification is produced on the surface of the workpiece by means of a specific modification of the surface geometry of the tool, and of a mapping of the surface of the tool onto the surface of the workpiece, produced by the diagonal generating method and dependent on the diagonal ratio,

wherein a specific modification of the surface geometry of the tool is preferably produced, in that the position of the dresser to the tool during the dressing is varied in dependence on the angle of rotation of the tool and/or on the tool width position, and/or

wherein the modification of the surface geometry of the workpiece on the tooth flank has a constant value, at least locally and/or in a first region in the generating pattern, in a first direction of the workpiece, and is given by a function $F_{Ft2}$ in a second direction of the workpiece which extends perpendicular to the first direction, and/or the modification of the surface geometry of the tool used for the production of the modification of the surface geometry of the workpiece has a constant value, at least locally and/or in a first region in the generating pattern, in a first direction of the tool, and is further preferably given by a function $F_{Ft1}$ in a second direction of the tool which extends perpendicular to the first direction, wherein the function on the tool is preferably the same function, optionally linearly compressed by a factor, as the function on the workpiece,

wherein the macrogeometry of the tool and/or the line of action of the dressing tool and/or the diagonal ratio and/or the compression factor are preferably selected such that the modification of the tool along a first line, on which the contact point moves on the tool in the machining of the workpiece, corresponds to the desired modification of the workpiece along a second line, on which the contact point moves on the workpiece.

4. A method in accordance with one of the preceding claims, wherein work is carried out with different diagonal ratios for the machining of different regions of the workpiece and/or in the use of different regions of the tool, and/or wherein the diagonal ratio is changed, while the width of the gear teeth is traveled over within the course of the gear tooth machining, wherein preferably work is carried out with a constant diagonal ratio within the respective regions.

5. A method in accordance with claim 1 or claim 2, wherein the extent of at least one line of constant modification is predefined, and the variation of the diagonal ratio is determined from this, in dependence on the axial feed and in particular, the non-constant function, which is given by it, and/or wherein the variation of the diagonal ratio takes place during the sweeping over of a modified region of the workpiece.

6. A method in accordance with one of the preceding claims, wherein in which a change of the diagonal ratio takes place while the tool is guided along the workpiece in the width direction, wherein the tool has a conical basic shape, wherein the modifications which can be achieved by the change of the diagonal ratio are preferably specifically influenced by a suitable choice of at least one and preferably more parameters of the machining process and/or of the macrogeometry of the tool, in particular of the axial cross angle and/or of the axial spacing and/or of the conical angle and/or of the profile angle of the tool.

7. A method in accordance with one of the preceding claims, wherein the tool has at least two modified regions, between which an unmodified region is disposed, and/or wherein work is carried out in at least two regions with different diagonal ratios.

8. A method in accordance with one of the preceding claims, wherein the tool has at least two regions which are used after one another for machining the same region of the workpiece, in particular at least one rough machining region and at least one fine machining region, wherein the machining steps with the two regions, in particular the rough-machining step and the fine machining step, take place with different diagonal ratios, wherein the regions used for the machining preferably utilize the total tool width, and/or wherein at least one region, in particular the fine-machining region, is preferably modified, wherein, for the case that both regions, in particular both the rough machining region and the fine machining region, are modified, the modification respectively has a different orientation, and/or the modification on the rough machining region only approximately produces the desired modification on the gear teeth.

9. A method in accordance with one of the preceding claims, wherein the tool has at least two regions which are used after one another for machining different regions of the workpiece, wherein the machining in the one region takes place with a different diagonal ratio than in the other region, wherein the tool preferably has a modified and an unmodified region, wherein the diagonal ratio is preferably smaller in the unmodified region than in the modified region to reduce the width of the tool, or wherein the diagonal ratio in the unmodified region is larger than in the modified region to reduce the load on the tool in this region.

10. A method in accordance with one of the preceding claims, wherein the tool has two modified regions, between which an unmodified region is disposed, which are used after one another for machining different regions of the workpiece, wherein work is at least carried out with different diagonal ratios in the modified regions to produce different modifications, in particular modifications having different orientations, in the respective regions of the workpiece, wherein the regions are preferably arranged such that the extent of the contact point between the tool and the workpiece is disposed completely in the unmodified region, in at least one grinding position.

11. A method in accordance with claim 10, wherein the two modified regions of the tool are differently modified, and in particular have modifications having a different orientation, and/or wherein the worm grinding wheel has a conical basic shape, wherein the conical angle of the worm grinding wheel is larger than 1', preferably larger than 30', is further preferably larger than 1°, and/or wherein the conical angle of the worm grinding wheel is less than 50°, preferably less than 20°, further preferably less than 10°.

12. A method in accordance with one of claims 1 to 11, wherein a dressing for the provision of the tool takes place, wherein the desired modification of the tool is produced by a change of the machine kinematics during the dressing process, in particular in that the position of the dresser relative to the tool is varied in dependence on the angle of rotation of the tool and/or the tool width position, wherein at least one unmodified region and/or at least two regions having different modifications are produced.

13. A gear manufacturing machine for the carrying out of the method in accordance with one of the claims 1 to 12, wherein the gear manufacturing machine includes a control function which is configured to change the diagonal ratio, within the framework of the machining of a workpiece to carry out a method in accordance with one of the claims 1 to 12, wherein the diagonal ratio is varied during the machining of the workpiece in dependence on the axial feed of the workpiece and/or of the tool.

14. A gear manufacturing machine in accordance with claim 13, wherein the gear manufacturing machine has an input function and/or a calculation function, via which different diagonal ratios and/or a variable diagonal ratio can be predefined and/or determined, and/or wherein the control function carries out at least two machining steps which take place after one another, in which a respective other region of the tool is used for machining the same region of the workpiece, in particular carries out at least one rough machining step and at least one fine machining step, wherein the machining steps, in particular the rough machining step and the fine machining step, take place with different diagonal ratios.

15. A gear manufacturing machine in accordance with claim 13 or claim 14, wherein the control function changes the diagonal ratio at least once in the course of a machining step, and/or the diagonal ratio is changed, while the width of the gear teeth is traveled over in the course of the gear tooth machining, wherein the control function preferably works with different diagonal ratios for machining different regions of the workpiece, and further preferably works with a constant diagonal ratio within the respective regions, and/or wherein the control function varies the diagonal ratio during the machining of the workpiece in dependence on the axial feed of the workpiece and/or of the tool, wherein the diagonal ratio is given, at least in one region of the axial feed, as a non-constant and continuous function of the axial feed.

**Revendications**

1. Procédé pour l'usinage de dentures d'une pièce par un procédé de laminage diagonal, où les dentures de la pièce sont usinées par le roulement d'un outil, dans lequel un avancement axial de l'outil est effectué, au cours de l'usinage, avec un rapport diagonal donné par le rapport entre l'avancement axial de l'outil et l'avancement axial de la pièce, **caractérisé en ce que** le rapport diagonal est modifié dans le cadre de l'usinage d'une pièce, dans lequel le rapport diagonal varie au cours de l'usinage de la pièce en fonction de l'avancement axial de la pièce et/ou de l'outil.

2. Procédé selon la revendication 1, dans lequel le rapport diagonal est donné au moins dans une zone de l'avancement axial en tant qu'une fonction non constante de l'avancement axial, laquelle présente au moins une zone dans laquelle elle présente un profil non constant permanent, et/ou dans lequel l'outil présente au moins une zone modifiée et une zone non modifiée et/ou au moins deux zones avec des modifications avec une orientation différente.

3. Procédé selon la revendication 1 ou 2 pour la fabrication d'une pièce avec une géométrie de denture corrigée et/ou une structure de surface modifiée, dans lequel une modification correspondante est générée sur la surface de la pièce au moyen d'une modification ciblée de la géométrie de surface de l'outil et d'une reproduction de la surface de l'outil sur la surface de la pièce générée par le procédé de laminage diagonal, dépendant du rapport diagonal,

dans lequel de manière préférée une modification ciblée de la géométrie de surface de l'outil est générée en ce que la position du dresseur par rapport à l'outil varie lors du dressage en fonction de l'angle de rotation d'outil et/ou de la position de largeur d'outil, et/ou

dans lequel la modification de la géométrie de surface de la pièce présente une valeur constante au moins localement dans le schéma de laminage sur le flanc de dent et/ou dans une première zone dans une première direction de la pièce et est donnée par une fonction $F_{Ft2}$ dans une deuxième direction de la pièce, laquelle s'étend de manière perpendiculaire par rapport à la première direction,

et/ou la modification de la géométrie de surface de l'outil utilisée pour la fabrication de la modification de la géométrie de surface de la pièce présente une valeur constante au moins localement dans le schéma de laminage et/ou dans une première zone dans une première direction de l'outil et est donnée par une fonction $F_{Ft1}$ par ailleurs de manière préférée dans une deuxième direction de l'outil, laquelle s'étend de manière perpendiculaire par rapport à la première direction, dans lequel de manière préférée la fonction sur l'outil est la même fonction éventuellement tassée linéairement d'un facteur que la fonction sur la pièce,

dans lequel de manière préférée la macrogéométrie de l'outil et/ou la ligne de prise de l'outil dresseur et/ou le rapport diagonal et/ou le facteur de tassement sont choisis de telle sorte que la modification de l'outil le long d'une première ligne, sur laquelle le point de contact se déplace sur l'outil lors de l'usinage de la pièce, correspond à la modification souhaitée de la pièce de long d'une deuxième ligne, sur laquelle le point de contact se déplace sur la pièce.

4. Procédé selon l'une quelconque des revendications précédentes, dans lequel l'usinage est effectué avec différents rapports diagonaux pour usiner différentes zones de la pièce et/ou lors de l'utilisation de différentes zones de l'outil, et/ou dans lequel le rapport diagonal est modifié, alors que la largeur de la denture est parcourue dans le cadre de l'usinage de dentures, dans lequel de manière préférée le travail est effectué avec un rapport diagonal constant au sein des zones respectives.

5. Procédé selon la revendication 1 ou 2, dans lequel le profil d'au moins une ligne à modification constante est spécifié et, sur cette base, la variation du rapport diagonal est définie en fonction de l'avancement axial et en particulier la fonction non constante, par laquelle celui-ci est donné, et/ou dans lequel la variation du rapport diagonal est effectuée lors du balayage d'une zone modifiée de la pièce.

6. Procédé selon l'une quelconque des revendications précédentes, dans lequel une modification du rapport diagonal est effectuée, alors que l'outil est guidé le long de la pièce dans le sens de la largeur, dans lequel l'outil présente une forme de base conique, dans lequel de manière préférée les modifications pouvant être obtenues par la modification du rapport diagonal sont influencées de manière ciblée par un choix adapté d'au moins un et de manière préférée de plusieurs paramètres de l'opération d'usinage et/ou de la microgéométrie de l'outil, en particulier de l'angle de croisement d'axes et/ou de l'espacement d'axes et/ou de l'angle conique et/ou de l'angle de profil de l'outil.

7. Procédé selon l'une quelconque des revendications précédentes, dans lequel l'outil présente deux zones modifiées, entre lesquelles se situe une zone non modifiée, et/ou dans lequel le travail est effectué avec des rapports diagonaux différents dans au moins deux zones.

8. Procédé selon l'une quelconque des revendications précédentes, dans lequel l'outil présente au moins deux zones, lesquelles sont employées l'une après l'autre pour l'usinage de la même zone de la pièce, en particulier au moins une zone dégrossisseuse et au moins une zone finisseuse, dans lequel les étapes d'usinage avec les deux zones, en particulier la coupe de dégrossissage et l'étape de finition, sont effectuées avec des rapports diagonaux différents, dans lequel de manière préférée les zones employées pour l'usinage utilisent la totalité de la largeur d'outil, et/ou dans lequel de manière préférée au moins une zone, en particulier la zone finisseuse, est modifiée, dans lequel, dans le cas où les deux zones, en particulier à la fois la zone dégrossisseuse et la zone finisseuse, sont modifiées, la modification présente respectivement une orientation différente, et/ou la modification sur la zone dégrossisseuse donne lieu seulement approximativement à la modification souhaitée sur la denture.

9. Procédé selon l'une quelconque des revendications précédentes, dans lequel l'outil présente au moins deux zones, lesquelles sont employées l'une après l'autre pour l'usinage de différentes zones de la pièce, dans lequel l'usinage est effectué dans une zone avec un autre rapport diagonal que dans l'autre zone, dans lequel l'outil présente de manière préférée une zone modifiée et une zone non modifiée, dans lequel de manière préférée le rapport diagonal dans la zone non modifiée est plus petit que dans la zone modifiée pour réduire la largeur de l'outil, ou dans lequel le rapport diagonal dans la zone non modifiée est plus grand que dans la zone modifiée pour réduire dans cette zone la contrainte de l'outil.

**10.** Procédé selon l'une quelconque des revendications précédentes, dans lequel l'outil présente deux zones modifiées, entre lesquelles se situe une zone non modifiée, lesquelles sont employées l'une après l'autre pour l'usinage de différentes zones de la pièce, dans lequel le travail et effectué avec différents rapports diagonaux au moins dans les zones modifiées pour générer dans les zones respectives de la pièce des modifications différentes, en particulier des modifications avec une orientation différente, dans lequel les zones sont de manière préférée disposées de telle sorte que le profil du point de contact entre l'outil et la pièce dans au moins une position de rectification se situe totalement dans la zone non modifiée.

**11.** Procédé selon la revendication 10, dans lequel les deux zones modifiées de la vis sans fin de rectification sont modifiées différemment, et en particulier présentent des modifications avec une orientation différente, et/ou dans lequel la vis sans fin de rectification présente une forme de base conique, dans lequel l'angle conique de l'outil est supérieur à 1', de manière préférée supérieur à 30', de manière davantage préférée supérieur à 1°, et/ou dans lequel l'angle conique de la vis sans fin de rectification est inférieur à 50°, de manière préférée inférieur à 20°, de manière davantage préférée inférieur à 10°.

**12.** Procédé selon l'une quelconque des revendications 1 à 11, dans lequel un dressage est effectué pour fournir l'outil, dans lequel la modification souhaitée de l'outil est générée par une modification de la cinématique de machine au cours du processus de dressage, en particulier en ce que la position du dresseur par rapport à l'outil varie en fonction de l'angle de rotation d'outil et/ou de la position de largeur d'outil, dans lequel au moins une zone modifiée et au moins une zone non modifiée et/ou au moins deux zones avec des modifications différentes sont générées.

**13.** Machine à tailler les engrenages pour mettre en œuvre le procédé selon l'une quelconque des revendications 1 à 12, dans laquelle la machine à tailler les engrenages comprend une fonction d'actionnement, qui est réalisée pour modifier, dans le cadre de l'usinage d'une pièce pour mettre en œuvre un procédé selon l'une quelconque des revendications 1 à 12, le rapport diagonal, dans laquelle le rapport diagonal varie au cours de l'usinage de la pièce en fonction de l'avancement axial de la pièce et/ou de l'outil.

**14.** Machine à tailler les engrenages selon la revendication 13, dans laquelle la machine à tailler les engrenages présente une fonction d'entrée et/ou de calcul, par l'intermédiaire de laquelle différents rapports diagonaux et/ou un rapport diagonal variable peuvent être spécifiés et/ou définis, et/ou dans laquelle la fonction de commande met en œuvre au moins deux étapes d'usinage effectuées l'une après l'autre, dans lesquelles une autre zone respectivement de l'outil est employée pour usiner la même zone de la pièce, en particulier met en œuvre au moins une étape de dégrossissage et au moins une étape de finition, dans laquelle les étapes d'usinage, en particulier l'étape de dégrossissage et l'étape de finition, sont effectuées avec des rapports diagonaux différents.

**15.** Machine à tailler les engrenages selon la revendication 13 ou 14, dans laquelle la fonction de commande modifie au moins une fois le rapport diagonal au cours d'une étape d'usinage et/ou le rapport diagonal est modifié, quand la largeur de la denture est parcourue dans le cadre de l'usinage de dentures, dans laquelle la fonction de commande travaille avec des rapports diagonaux différents de manière préférée pour usiner différentes zones de la pièce, et travaille de manière davantage préférée à l'intérieur des zones respectives avec un rapport diagonal constant, et/ou dans laquelle la fonction de commande fait varier le rapport diagonal au cours de l'usinage de la pièce en fonction de l'avancement axial de la pièce et/ou de l'outil, dans laquelle le rapport diagonal est donné au moins dans une zone de l'avancement axial en tant qu'une fonction non constante et permanente de l'avancement axial.

Figur 1

# Figur 2

# Figur 3

a)

b)

Figur 4

# Figur 5

a)

b)

c)

Figur 6

Figur 7

Figur 8

## Figur 9

Figur 10

Figur 11

# Figur 12

Figur 13

# Figur 14

Figur 15

## Figur 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1995010 B1
- DE 102012015846 A1
- US 2011250029 A1
- US 4961289 A
- DE 19706867 A1
- DE 3704607
- EP 1995010 A
- DE 10208531

**In der Beschreibung aufgeführte Nicht-Patentliteratur**

- **NIEMANN, G ; WINTER, H.** Maschinenelemente. Springer Verlag, 1983, vol. 3
- **ZIERAU, S.** Die geometrische Auslegung konischer Zahnräder und Paarungen mit parallelen Achsen. Institut für Konstruktionslehre, Technische Universität Braunschweig